# EUROPEAN PATENT APPLICATION

(11) **EP 4 369 785 A1**
(43) Date of publication of application: **15.05.2024**
(21) Application number: 22206637.5
(22) Date of filing: 10.11.2022
(51) Int. Cl.: H04W 36/00, H04W 36/36, H04W 56/00, H04W 84/10

(54) **HANDOVER/MOBILITY MANAGEMENT FOR WIRELESS TIME-SENSITIVE NETWORKS AND BETWEEN PUBLIC/PRIVATE NETWORKS**

(71) Applicant: INTEL Corporation, Santa Clara, CA 95054 (US)
(72) Inventor: AGARWAL, Anshu, 560037 Bangalore (IN); T PRABHU, Vignesh, 560108 Bangalore (IN); GOPAL, Beeresh, Santa Clara, 95054 (US); GOWDA, Chandrashekar, 560076 Bangalore (IN); HEGDE, Mythili, 560078 Bangalore (IN); MANOHAR, Naveen, 560010 Bangalore (IN); PETIT, Barath C., 560077 Bangalore (IN); CHAKRABORTY, Suranjan, 560035 Bangalore (IN); ANNAMALAI, Parthiban, 560016 Bangalore (IN); CHANDEL, Amit Singh, 560103 Bangalore (IN)
(74) Representative: Viering, Jentschura & Partner mbB Patent- und Rechtsanwälte

(57) **Abstract**

Disclosed herein are systems, devices, and methods that enables wireless handover between public cellular networks and private cellular networks and/or improves wireless handover in time-sensitive networks. The system may receive a handover request from a wireless connection point with which a user equipment device is configured for data packet communication over a first data communication connection. In response to the handover request, the system may make a handover decision including whether to reconfigure the user equipment device for data packet communication with a target wireless connection point over a second data communication connection. The system may establish and time-synchronize, based on the handover decision, the second data communication connection. If the establishment and time-synchronization is successful, the system hands over data packet communication from the first data communication connection to the second data communication connection and releases the first data communication connection.

## Description

### Technical Field

The disclosure relates generally to wireless handovers/mobility management and, in particular, to handovers of wireless connections that are transferring time-sensitive (e.g., real-time) data and also to handovers that may be between a public network and a non-public network.

### Background

In wireless systems, handovers are an important aspect of mobile connectivity because as a wireless client moves from location to location, the properties of the client's physical connection to the access point may change, and the client may need to switch to a new wireless access point using a handover. At any given location, a wireless client may be within range of a number of different access points that the mobile client may utilize for wireless connectivity, including, for example, cellular base stations, Wi-Fi access points, hotspots, etc. The handover process involves identifying available access points and their properties, selecting a target access point, and handing over the current connection to the target access point. A handover may be time consuming, may cause a loss of connectivity, and may also result in lost data. In addition, even if a wireless client may be within range of an access point, if the wireless client does not have the appropriate access credentials, the wireless client may not be able to utilize an otherwise available wireless access point, which may lead to poor or no connectivity in certain locations.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:
FIG. 1 shows an exemplary wireless scenario that may involve a public cellular network and a private cellular network;
FIG. 2 shows an exemplary flowchart of a public-private handover process;
FIG. 3 illustrates an exemplary problem scenario associated with handovers in cellular systems;
FIG. 4 shows an exemplary smart mobility system that may implement an improved handover procedure for time sensitive networks (TSNs);
FIG. 5 shows an example smart mobility manager that may implement an improved handover procedure for TSNs;
FIG. 6 shows an example flowchart of an improved handover procedure that may be implemented by a smart mobility manager for supporting TSN communications;
FIG. 7 shows an exemplary a sequence diagram of a conditional handover;
FIG. 8 illustrates an exemplary handover scenario that may be handled by a smart mobility manager;
FIG. 9 illustrates an exemplary schematic drawing of a device that may enable handover between public cellular networks and private cellular networks and/or improve handovers in time-sensitive networks; and
FIGs. 10-12 each depict a schematic flow diagram of an exemplary method that may enable handover between public cellular networks and private cellular networks and/or improve handover in time-sensitive networks.

### Description

The following detailed description refers to the accompanying drawings that show, by way of illustration, exemplary details and features.

The word "exemplary" is used herein to mean "serving as an example, instance, or illustration." Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (*e.g.,* one, two, three, four, [...], etc.). The phrase "at least one of' with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (*e.g*., "plural [elements]", "multiple [elements]") referring to a quantity of elements expressly refers to more than one of the said elements. For instance, the phrase "a plurality" may be understood to include a numerical quantity greater than or equal to two (*e.g.,* two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, *e.g.,* provided as a file, a portion of a file, a set of files, a signal or stream, a portion of a signal or stream, a set of signals or streams, and the like. Further, the term "data" may also be used to mean a reference to information, *e.g.,* in the form of a pointer. The term "data", however, is not limited to the aforementioned examples and may take various forms and represent any information as understood in the art.

The terms "processor" or "controller" as, for example, used herein may be understood as any kind of technological entity (e.g., hardware, software, and/or a combination of both) that allows handling of data. The data may be handled according to one or more specific functions executed by the processor or controller. Further, a processor or controller as used herein may be understood as any kind of circuit, *e.g.,* any kind of analog or digital circuit. A processor or a controller may thus be or include an analog circuit, digital circuit, mixed-signal circuit, software, firmware, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint^{™}, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (*e.g*., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both "direct" calculations via a mathematical expression/formula/relationship and 'indirect' calculations via lookup or hash tables and other array indexing or searching operations.

As noted above, a handover process involves identifying available access points and their properties, selecting a target access point, and handing over the current connection to the target access point. In terms of identifying and selecting target access points, at any given location, a wireless client may be within range of a number of different access points. However, unless the wireless client is authorized to utilize an access point, the wireless client may not be able to use the otherwise available access point or may not be able to select the access point that would provide the best connection. As a result, the wireless client may experience a poor connection or no connectivity, even in locations served by otherwise available wireless access points. One such scenario is in locations where a private cellular network (PCN) or non-public network (NPN) may exist but where the wireless client (e.g., a cellular "subscriber unit" or "user equipment") is not a member of the PCN. If the coverage or quality of the subscriber unit's public network is poor or non-existent at the location, the subscriber unit will have no cellular connectivity or only have poor connectivity through the public cellular network.

This scenario is quite common in today's world, where a wireless client, subscribed to a public cellular service provider, may visit an industry site, a corporate campus, a sport stadium, a factory, an airport, a parking lot, an office building, etc. where the public cellular service provider may not have sufficient coverage in the area (e.g., due to obstructions, tall buildings, interference, complex fading environments, etc. that may negatively impact cellular coverage) or may not have sufficient cellular capacity for the number of users in the area. Such locations may be serviced by one or more PCNs, but because public subscribers do not have access to the wireless coverage of the PCN, the public subscriber may suffer a loss of service, loss of connectivity, and/or loss of data in these areas. To improve their cellular connectivity in these types of areas, public cellular service providers typically add additional infrastructure (additional cellular base stations or cellular repeaters), which may be costly and logistically infeasible, depending on the premises, and leads to redundant cellular infrastructure (a private one and a public one) at the same location, which is neither efficient nor sustainable. As discussed in more detail below, an improved handover system is described below that may provide a cost-effective, sustainable, and reliable utilization of existing PCNs by public network subscribers.

The improved handover system disclosed below also addresses problems that may be associated with using wireless networks in time-sensitive networking (TSN) scenarios. The Institute of Electrical and Electronics Engineers (IEEE) has defined a set of standards for TSN that, as of today, make wired-connections preferred due to the required reliability, low latency, high throughput, etc. of such TSNs. Industry 4.0 smart factories, autonomous systems, mobile and collaborative robots, Power Grid, and virtual/mixed reality are some examples of networks that demand accurate time synchronization and low latency communications set forth by the TSN standards, but these same environments are at the same time devices becoming more mobile and demanding wireless connectivity. Despite advances in wireless and cellular technologies, such as 5G, Wi-Fi 6, WiFi7, no system is yet able to deliver wireless communications that reliably, securely, and safety provide the time guarantees that are required in TSNs and for time-safety critical systems, especially where the wireless devices are mobile and must cope with associated handover scenarios. This may be particularly problematic in industrial settings, where complex networking results in a diverse set of use cases and difficult-to-meet TSN requirements, making it difficult to satisfy the requirements using wireless connectivity, where the mobility of the wireless client may lead to frequent handovers, which in turn may lead to connectivity disruptions, higher latency, lower reliability, and lack of time synchronization.

This problem has been recognized by the third-generation partnership project (3GPP) in one of its technical reports outlining a "Study on enhancement of 5G System (5GS) for vertical and Local Area Network (LAN) services," 3GPP TR 23.734, v16.2.0 (2019-06). In Section 5.3, for example, the report questions "to what extent TSN can be supported when there is mobility" of a wireless client, and the report leaves this question open. The improved handover system discussed in more detail below addresses this question and provides a framework to ensure that TSN handovers in wireless mobility scenarios may provide wire-equivalent reliability and time-guaranteed communication (e.g., real-time communication). In particular, the handover system discussed below may improve handover reliability and reduce communication interruption time during a handover such that TSN requirements (e.g., latency) may be met, even within a wireless implementation.

### Enabling Handover Between Public Networks and PCNs

One feature of the improved handover system disclosed herein is that it may provide a mechanism for handing off cellular connections of public subscribers between public networks and private networks. In contrast to public cellular networks that offer mobile network services to the general public, non-public networks (or NPNs, which is the 3GPP term for a PCN), are typically set up by a private entity, such as a corporation, a factory, a stadium, a university, an enterprise, etc., that administers the NPN for the sole use of its members. NPNs are typically deployed on the private entity's defined premises/location, such as an office building, a campus, a stadium site, a parking lot, a factory site, etc., to provide private coverage within a specific geographic area. An NPN may be deployed as a Stand-alone Non-Public Network (SNPN) or a Public Network Integrated NPN (PNI-NPN). An SNPN is operated by an NPN operator and does not rely on network functions provided by a public network (a public land mobile network (PLMN)). A PNI-NPN is an NPN that is deployed with the support of a PLMN

In a typical SNPN, all SNPN network functions may be located inside the logical perimeter of the defined premises (e.g., the geographic area of the factory, industry site, stadium, building, etc.) and an SNPN is separated from the public network. In order to identify whether a cellular network belongs to an SNPN, the combination of a PLMN identifier (PLMN ID) and Network identifier (NID) may be used, where both the PLMN-ID and the NID are broadcast by the SNPN in its System Information Broadcast (SIB). A PLMN-ID contains a Mobile Country Code (MCC) and a Mobile Network Code (MNC), and for an SNPN, the MCC usually uses a fixed code of 999. Because an SNPN is typically deployed as an independent network isolated from the PLMN, an SNPN may offer more control over security, data privacy, and performance, and it is therefore a frequently-used model for private network deployments.

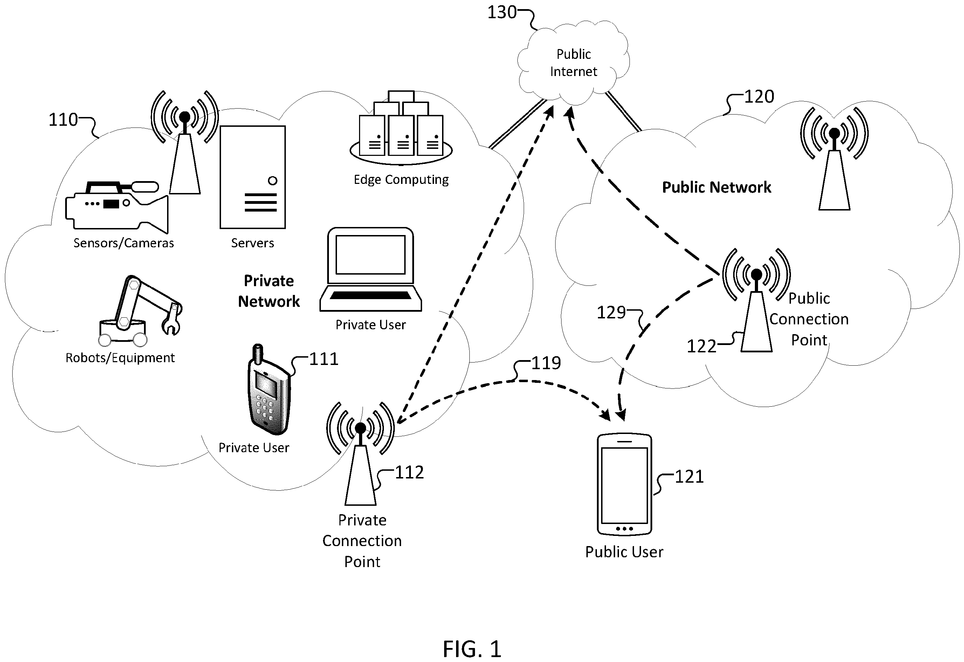

The improved handover system discussed herein enables public users of a public network (such as subscriber units of a PLMN operated by a public carrier) to seamlessly handover wireless connections from the cellular public network to a cellular private network (such as an SNPN or PNI-NPN). FIG. 1 shows an example scenario that may benefit from an improved handover that provides a mechanism for handing over a public subscriber's connection between a public cellular network and a private cellular network. A private network 110 may be network set up by a private entity to provide networked communications for its private users (such as private user cell phone 111), connecting a number of private users, resources, sensors, servers, and computing devices of the private entity. The private network 110 may be connected to the public internet 130 and public telephone network so that its private users may access the public internet 130 and make cellular calls from within the private network 110. The private network 110 may also include a private wireless network to provide private cellular connectivity (e.g., data transfer and cellular calling) to its subscribers via one or more wireless access points (e.g., private connection point 112 (e.g., a cellular base station, eNodeB, gNodeB, etc.)) of the private network 110.

Also shown in FIG. 1 is a public user 121 who is located nearby private connection point 112 but is not a member of the private network 110. Instead, public user 121 is a public subscriber to the public cellular network 120. The public user 121 may connect to the public cellular network 120 through one or more wireless access points (e.g., public connection point 122 (e.g., a cellular base station, eNodeB, gNodeB, etc.) of the public cellular network 120 (e.g., a PLMN). As shown in FIG. 1, public user 121 has a connection 129 to the public internet 130 via public connection point 122 and may make cellular calls using the public connection point 122. In a conventional system, public user 121 would not be able to utilize nearby private connection point 112-even if it offered better wireless connectivity-because the public user 121 is not a member of the private network 110.

The improved handover system, however, enables a handover of public user 121 from the public connection point 122 to the private connection point 112, so that the public user 121 may have a connection 119 to use the public internet 130 and/or to make public cellular calls through the private connection point 112, even though the public user 121 is not a subscriber/member of the public network 110. This handover may be governed by a service level agreement (SLA) between the public network 120 and the private network 110. Based on the SLA, if a public subscriber (e.g., public user 121) reports a nearby a wireless connection point of a private network (e.g., private connection point 112), the public service provider (e.g., public network 120) may request that the private network (e.g., private network 110) provide cellular resources (e.g., via private connection point 112) to accommodate cellular connectivity of the public subscriber (e.g., public user 121). Once the conditions change (e.g., through movement, capacity changes, etc.) such that the public subscriber (e.g., public user 121) has sufficient access to cellular resources on the public network (e.g., via public connection point 111 or other public connection point), the public subscriber may be handed back over to the public network (e.g., when a same/sufficient level of service through a public connection point is again possible).

In addition, the level of connectivity provided to the public subscriber on the private network may be stipulated and may be different from that of private subscribers (e.g., public user 121 may have limited access compared to private user 111). For example, the public user 121 may not be able to access internal data resources that are accessible within private network 110, or the service level provided to public user 121 may be different from that of private subscribers. In this regard, the private network 110, may make use of network "slicing" to provide cellular connectivity to "guest" users while differentiating "guest" levels of service as compared to that of private subscribers. For example, public user 121 may be provided with a lower quality of service (QoS), lower throughput, lower number of channels, etc. as compared to those received by private subscriber 111, depending on the terms of the SLA between the provider of private network 110 and the provider of public network 120. As another example, the SLA may stipulate that private network 110 must provide to the public user 121 at least the same level of service (e.g., QoS, throughput, etc.) as public user 121 experienced while on public network 120 so as to enjoy a seamless and high quality connection during the handover. In addition, public user 121 may be denied access to the internal resources/data of private network 110 (e.g., servers, sensors/cameras, robots/equipment that may be connected to private network 110). Of course, the extent of the allocation of resources from private network 110 to public user 121 and their associated properties may be detailed in the SLA.

By allowing public subscribers to be handed over to a private cellular network, several benefits may be realized. For example, the public subscriber may enjoy an improved user experience, having seamless cellular connectivity even within a private location where public cellular coverage is either poor or capacity-limited as compared to the private cellular network at that location. Because the handoff may be managed/facilitated by the SLA between the operator of the public cellular network and the operator of the private cellular network, the handover may be seamless and unnoticed by the public subscriber, except that the public subscriber may experience improved coverage in areas that are otherwise not covered by the public infrastructure. Of course, both public and private network operators may benefit from such handoffs, where the public operator may offer, without the costs associated with adding additional infrastructure, extended coverage areas or better quality of service in congested public locations, while a private operator may charge usage fees when public subscribers are handed over to its private network.

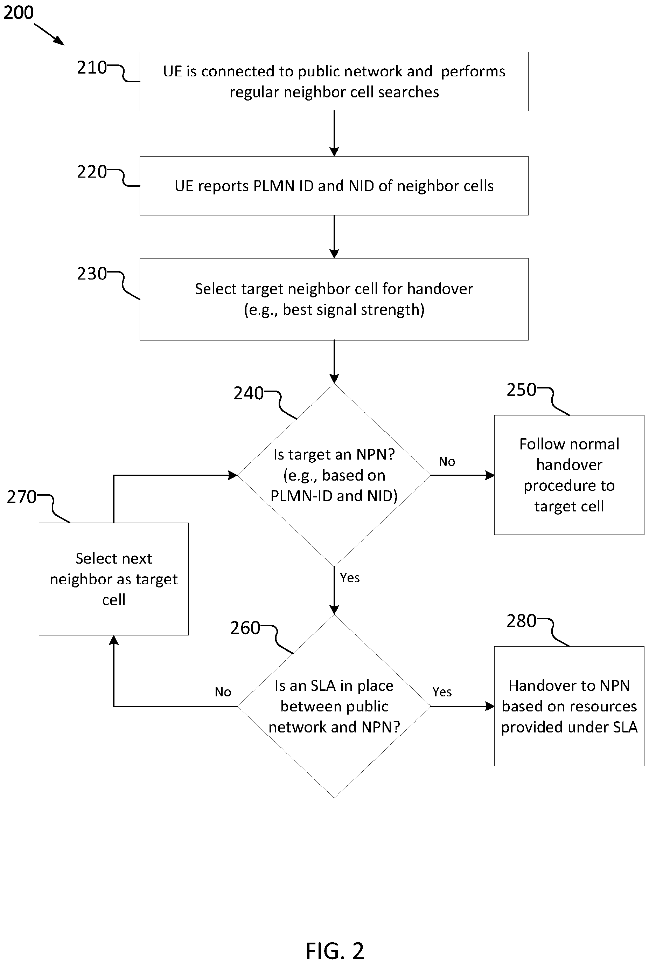

An exemplary flowchart 200 of the public-private handover process is shown in FIG. 2. A public subscriber (e.g., a user equipment or "UE") is, in 210, connected to a public cellular network via a public wireless access point (e.g., a cellular base station, eNB, gNB, etc.) and performs regular "neighbor cell" searches for locating nearby base stations and reporting associated wireless connection properties (e.g., signal strength, channel quality, etc.) for each neighboring cell. As part of the report, the UE may also report, in 220, the PLMN ID and NID for each neighboring cell. To the extent a handover becomes necessary or desired (due to low channel quality, signal strength, data rate, etc. of the public subscriber's existing cellular connection), the handover process may select a target cell from among the neighboring cells for a handover. The decision may be based on, for example, the UE-reported wireless connection properties of the neighboring cells or information gathered by other UE's, other base stations, etc. (e.g., describing channel quality, signal strength, data rate, etc. of each neighboring cell). In 240, the handover process determines whether the selected target cell is an NPN or PCN by, for example, analyzing the PLMN-ID and/or NID to determine, for example, whether the MCC is 999. If the selected target cell is a public network, the process continues to 250, where it may use conventional handover procedures to facilitate a handover between two public cells.

If the selected target cell is an NPN or PCN, the process continues to 260, where the handover process determines whether there is an SLA in place between the public network and the NPN/PCN of the selected target cell. The handover process then facilitates a handover to the selected target cell, where its resources are allocated to the UE based on the terms of the SLA. For example, the UE may be provided resources that have a limited QoS, a limited throughput, a limited number of channels, limited channel widths, a limited amount of time for camping on the target cell, etc. As another example, the SLA may stipulate that the UE should be provided resources that match the same level service the UE experienced in the public network (e.g., in terms of QoS, throughput, channels, channel widths, etc.). To provide the SLA-specified level of service/resources to the public subscriber, the handover procedure may utilize, for example, network slicing. In 5G, for example, an SLA that uses the network slicing concept is called NS-SLA. One or more network slices may be allocated to the public subscriber, where the network slice has the SLA-agreed QoS, access rights, channel quality, etc. As should be appreciated, the network slice may simply enable cellular connectivity and/or public internet connectivity while barring the public subscriber from accessing the internal information/assets of an NPN/PCN (e.g., those resources that should be accessible only to the private subscribers of the NPN/PCN).

As should be appreciated, the NPN/PCN's resources used by the public subscriber may be monitored and tracked so that the NPN/PCN may adjust the level of service and/or charge for its usage. For example, the NPN may track the amount of data consumed by the public user, the amount of time the public user camped on the NPN/PCN's access points, the length of cellular calls made using the NPN/PCN, etc., and then make adjustments to and/or bill for the resources provided.

### Handover for Time-Sensitive Networks

The improved handover system described herein may also provide a framework for meeting latency requirements of a wireless time-sensitive networking connection when the connection is handed over in a mobility scenario. Time-Sensitive Networking (TSN) generally relates to network communications with strict requirements for transport latency, delay variation, and packet loss. TSNs may be important for distributed real-time systems, where network communications must transmit data among endpoints of the system in "real time" in order to, for example, control machinery, operate a device, or provide instructions to a robot. A set of requirements for TSN's have been under development and have been defined by the Time-Sensitive Networking task group of the IEEE 802.1 working group for wired TSNs, where the task group has defined mechanisms for TSN communication for wired networks. The standard sets out to ensure guaranteed data transport with bounded low latency, low delay variation, and extremely low loss. Time Synchronization is an important aspect of TSN, where all devices that are participating in real-time, TSN communication need to have a common understanding of time and thus need to synchronize their clocks to one another though a Time Synchronization (TS) of the data connection.

Because of the strict data transport standards of TSNs, implementing them with wireless networks presents significant challenges, especially when the wireless devices are mobile. This is because the reliability, stability, mobility, and interference-related issues associated with mobile wireless communications make it difficult to meet the requirements of the TSN. In the 5G wireless standards developed by 3GPP, release 16 introduced support for wireless TSN based on the IEEE TSN standard, where the wireless 5G system is modeled as a logical TSN bridge per a user plane function (UPF) base. *See* 3GPP TR 21.916 v16.2.0 (2022-07) at Section 6.3 (5GS Enhanced Support of Vertical and LAN Services). While release 16 of the 5G standard sets forth a base integration of IEEE TSN into a cellular wireless network, the standard does not provide details for handling handovers and mobility. In addition, improvements to wireless networking, for example in the Wi-Fi 6 and Wi-Fi 7 standards, may offer additional capabilities to lower latency bounds with high efficiency, where the IEEE TSN standard may be mapped directly to the IEEE wireless standards (e.g., Wi-Fi 6, Wi-Fi 7, or any other of the IEEE 802.11 standards), without architecture changes and without protocol translation gateways. However, the unlicensed spectrum in which Wi-Fi access points operate combined with Wi-Fi's random-access protocols, mobility and handovers impose major challenges to meeting time-sensitive requirements of a TSN over Wi-Fi. The disclosed handover system discussed below fills these gaps in the standards by providing, among other features, a framework to ensure that cellular handovers in mobility scenario adheres to TSN latency requirements by a make-and-synchronize-before-break approach and by optionally triggering a companion control device if a planned handover fails or is delayed.

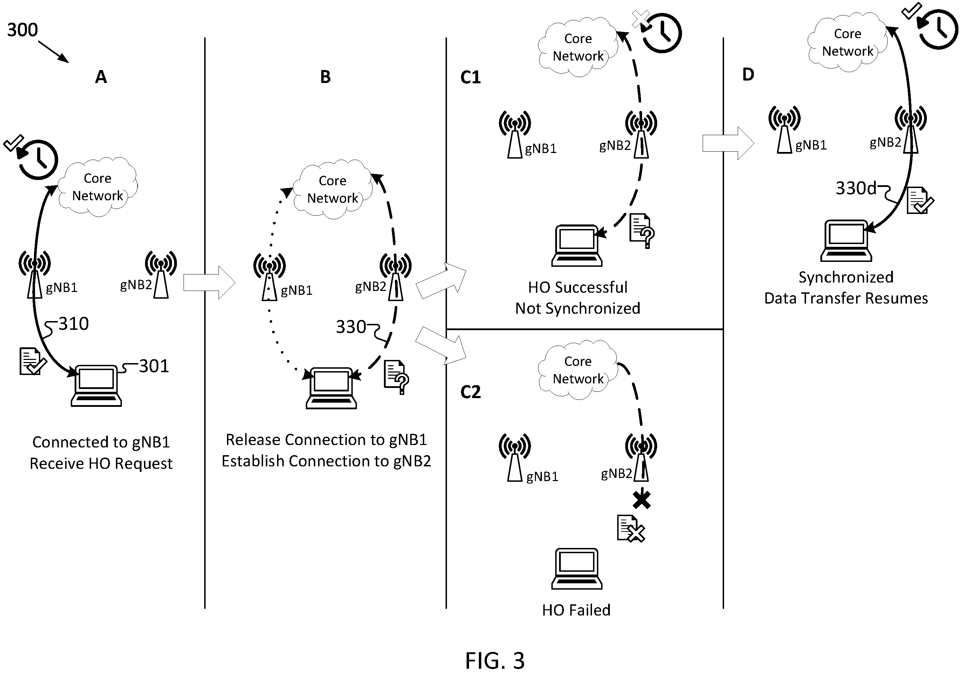

FIG. 3 illustrates the problem associated with conventional handovers in cellular systems. In the classic handover, packet communication between a user equipment (UE) and a network endpoint may be interrupted for a portion of time between releasing an existing connection with a source wireless connection point (e.g., a gNB) and establishing a new, time-synchronized connection with a target wireless connection point. If packet data communication is interrupted during handover, packets may be lost, delayed, or retransmitted, which may create a problem for a TSN that must maintain strict latency requirements. This scenario is shown in in FIG. 3 by a sequence 300 of frames labeled A, B, C, and D.

Starting at frame A, a user equipment 301 (e.g., a laptop, smartphone, or other mobile device) may have established a data connection 310 with the core network via a wireless connection point gNB1 (e.g., a base station, eNodeB, gNodeB, etc.) to support time-sensitive networking communications with an endpoint device. As such, the data connection 310 is time-synchronized. During communication, the user equipment 301 receives a handover (HO) request to switch its communication from gNB1 to gNB2-the target wireless connection point (e.g., a different base station, eNodeB, etc.) for the handover. As shown in frame B, in a classic handover, this means that the user equipment 301 releases data connection 310 and attempts to establish a new data connection 330 via the target wireless connection point, gNB2. If the handover is successful, as shown in frame C1, user equipment 301 will have an established data connection 330 via gNB2 and it will have released its previous data connection 310 via gNB 1. However, the new data connection 330 may not yet be time-synchronized and data packets may be lost or delayed, impacting the latency and causing the TSN requirements to be missed. Only after the new data connection 330 has been time-synchronized, as shown in frame D by data connection 330ts), may TSN data transfer reliably resume.

Returning to frame B, if the handover is unsuccessful, as shown in frame C2, user equipment 301 will have failed to establish data connection 330 via gNB2 and it will have already released its previous data connection 310 via gNB1. This, too, means that data packets may be lost or delayed, again impacting the latency and causing the TSN requirements to be missed. Only after the new data connection 330 has been time-synchronized, as shown in frame D by data connection 330d), can TSN data transfer reliably resume. As should be appreciated, such a scenario with lost or delayed data packets is unacceptable for TSNs.

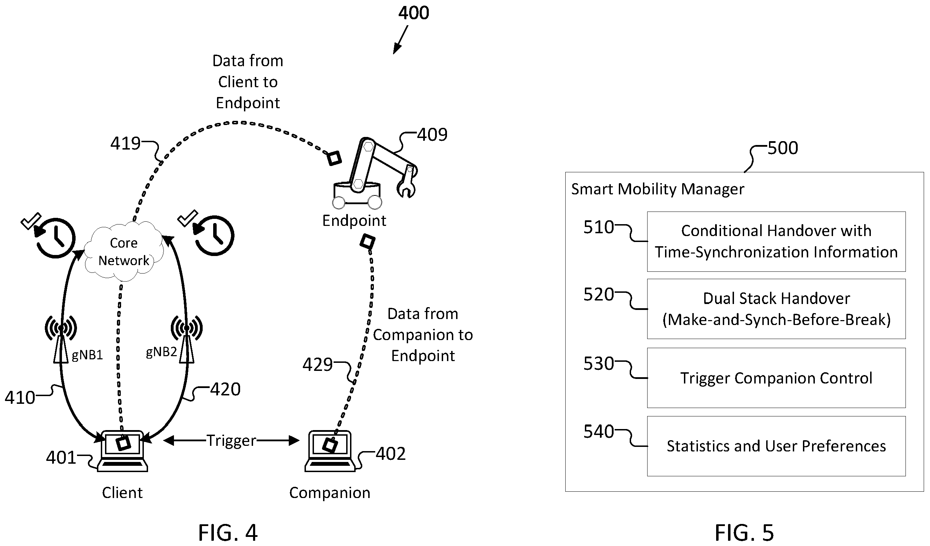

To overcome these handover problems, an improved handover procedure may be used, features of which are exemplarily shown in the smart mobility system 400 of FIG. 4. In the scenario of FIG. 4, a wireless client 401 is controlling an endpoint 409 by sending it real-time data 419 (e.g., TSN communication). At the same time, the wireless client 401 is in the process of handing over its wireless connection that is supporting the communication of real-time data 419 (e.g., a first data communication connection), handing it from gNB1 to gNB2 (e.g., through a conditional handover). In particular, the improved handover procedure may establish and maintain simultaneous data stacks (e.g., a dual stack), both of which are capable of supporting communication of real-time data 419 (e.g., at least two data communication connections), one over its wireless connection with gNB 1 (source connection 410) and one over its wireless connection with gNB2 (target connection 420). Importantly, both stacks are not only capable of sending data, but they are also time-synchronized to support TSN data communications. Moreover, the existing connection (e.g., source connection 410 via gNB1) is not released until the target connection (e.g., target connection 420 via gNB2) is time-synchronized. In this manner, if the handover to the target is delayed, the client may continue to send real-time data 419 using the source (e.g., source connection 410 via gNB1) so that no data is lost or delayed. In addition, if handover fails or is expected to fail or if the source connection 410 cannot reliably maintain its communication via gNB1, wireless client 401 may send a trigger to a companion device 402 that may also have its own existing session for communicating real-time data 429 to control the endpoint 409. Each of these features help ensure that if TSN communications are detected, the data is not delayed or lost such that the communication may adhere to TSN requirements.

FIG. 5 shows a smart mobility manager 500 that implements the improved handover procedure. If the smart mobility manager system detects that data transmissions are part TSN communications, then the smart mobility manager 500 may use any of the features of the improved handover procedure discussed above. The smart mobility manager 500 may have systems, circuits, software, and/or hardware that support, in 510, conditional handovers, where time-synchronization information may be included in the handover request, so that client/UE may use time-synchronization information to select a target wireless access point. The smart mobility manager 500 may also have systems, circuits, software, and/or hardware that support, in 520, a dual active protocol stack (DAPS) handover, where the target connection is established and time-synchronized before the source connection is released. The smart mobility manager 500 may also have systems, circuits, software, and/or hardware that support, in 530, triggering, when the client suspects that it may not be able to support TSN communication with an endpoint, a companion controller that can communicate with the TSN endpoint on its behalf. The smart mobility manager 500 may also have systems, circuits, software, and/or hardware that maintain statistics, user preferences, etc. for the handover procedure.

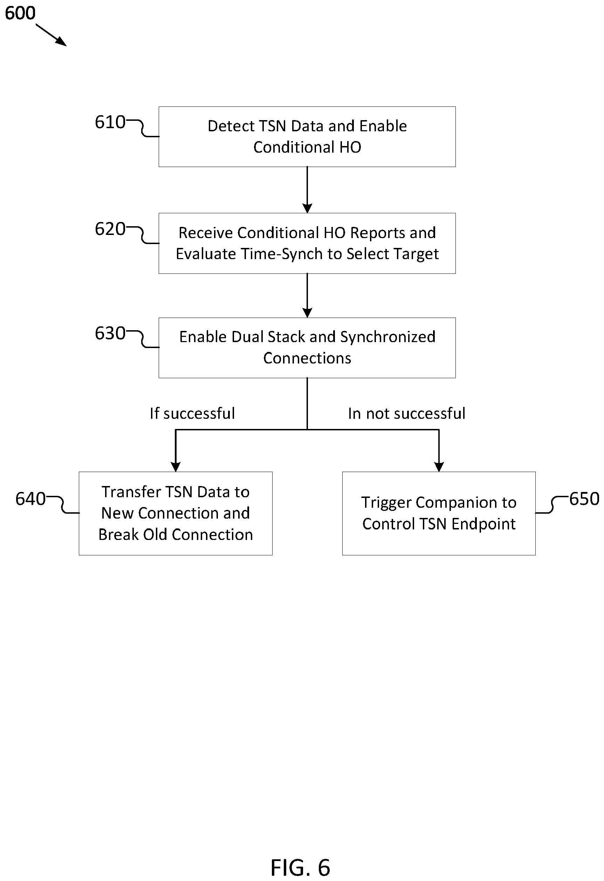

FIG. 6 shows a flowchart 600 of the improved handover procedure that may be implemented by a smart mobility manager (e.g., smart mobility manager 500) for supporting TSN communications. If, in 610, the smart mobility manager detects that a UE's data transmissions are part of TSN communications (e.g., with an endpoint that is being real-time controlled by data from the UE), then the mobility manager may configure its handover decisions to be a conditional handover. A conditional handover means that the UE may take control of deciding if handover (HO) is needed and when it must be executed, even before the UE enters into a situation where the handover conditions are met. The conditional handover may enable a UE to make a final decision on a timing of the handover based on monitoring radio channels. This may improve the handover success rate by ensuring that UE can decide if handover is required and when the handover process may be initiated. In addition, the conditional handover may define a triggering point for the handover, which means that the command may be sent to the UE (e.g., in a handover request) before the triggering point is reached, allowing the UE to evaluate the targets before the handover is triggered.

The conditional handover may involve a multipart process, where the UE may provide Measurement Report(s) to the base station of the existing connection (e.g., the source gNB) that include wireless-related measurements for potential wireless access points that may be targets for the handover. Then, the source gNB then sends requests to each of the potential targets, asking each to acknowledge the handover request and prepare corresponding configuration reports that may be sent to (e.g., in a handover request) and used by the UE to evaluate/rank the targets (e.g., as part of a handover decision). The reports may include, for example, Received Signal Reference Power (RSRP), Received Signal Reference Quality (RSRQ) or Signal to Interference and Noise Ratio (SINR)). In addition, the reports may also include a TSN Grandmaster ID so that the UE may evaluate the time-synchronization associated with each target UE (e.g., to evaluate whether it has the same time-synchronization as the source gNB). Then, if the UE is configured for conditional handover, it will receive, in 620, a conditional handover command (e.g., CHO command or handover request) that contains the corresponding configuration of each target cell and its reported conditions (e.g., RSRP, RSRQ, SINR, TSN Grandmaster ID, etc.). The UE may evaluate the configuration and reported conditions of each potential target to determine in a handover decision if a handover is desired and, if so, determine which of the potential targets to use for the handover. For example, if the Grandmaster ID is for the target is the same as the source, the time-synchronization of the new connection may be faster, so the UE may select the target based on it having the same grandmaster ID.

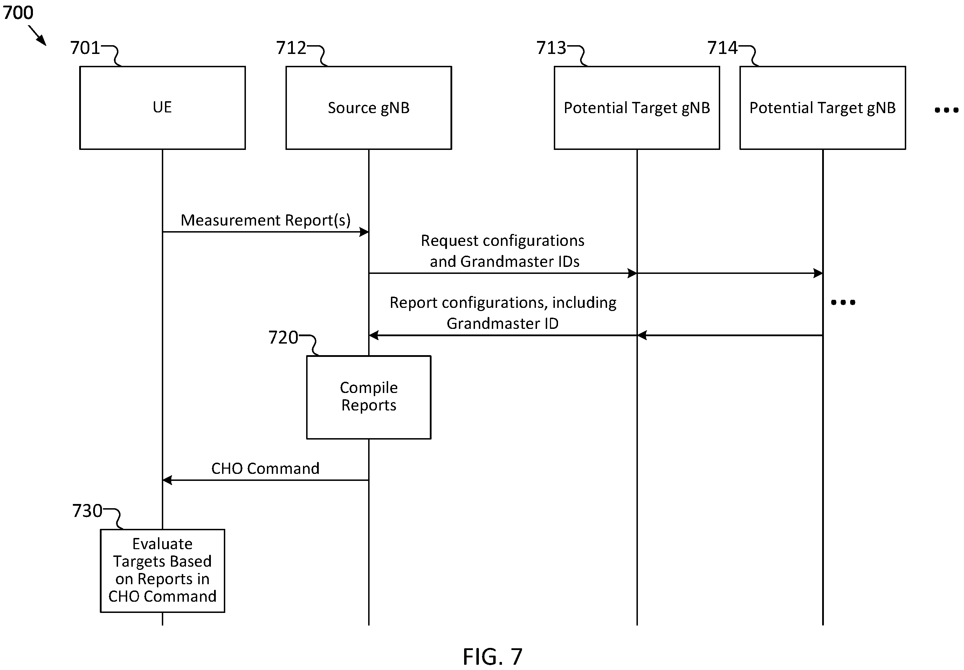

A more detailed example of this multipart process of the conditional handover are shown in a sequence diagram 700 of FIG. 7, where a wireless UE 710 is connected to source gNB 712. The UE 710 may send measurement reports to the source gNB 712 about nearby gNBs that it has detected and which may be potential target gNBs for a handover, including potential target gNB 713 and potential target gNB 713. (As should be appreciated, while two target gNBs are shown, there may be any number of potential target gNBs depending on the number of nearby gNBs that are detected and measured by the UE 710.) The source gNB 712 may send requests to each of the potential target gNBs 712 and 713, asking each to acknowledge the handover request and prepare corresponding configuration reports. Each potential target gNBs 712 and 713 then sends its corresponding configuration and its reported conditions, including the Grandmaster ID. In 720, the source gNB 712 compiles the reports and sends them in a conditional handover (CHO) command to UE 701. In 730, the UE 701 evaluates the compiled configuration reports to determine if a handover is desired and, if so, determine which of the potential target gNBs 713, 714 to use for the handover. The evaluation may search the Grandmaster IDs of the potential targets to select the potential target with the same Grandmaster ID as the current connection between UE 701 and source gNB 712. In case that the same Grandmaster ID is not found, UE 701 may select from among the potential targets based on other parameters of the CHO command and other properties of the potential targets.

Returning to FIG. 6, after a target has been selected, the mobility manager, in 630, may begin a dual active protocol stack (DAPS) handover to the selected target, where the target connection is established and time-synchronized before the source connection is released. The time-synchronization portion of the DAPS-handover may be important for TSN communications, where each node in the network must have the same understanding of time. Next, if the handover and time-synchronization is successful, in 640, the UE now sends TSN data sent over the newly established and time-synchronized connection and may release the source connection. If the handover is not successful (e.g., it fails or the new connection cannot support the TSN requirements), in 650, the mobility manager may trigger a companion controller that is capable of controlling the endpoint according to the TSN requirements. For example, the companion controller may have a wired or more stable connection to the endpoint. In this manner, if the client suspects that it may not be able to meet the TSN requirements when communicating with the endpoint, the companion controller can reliably take over control of the endpoint, improving the fault-tolerance of the handover.

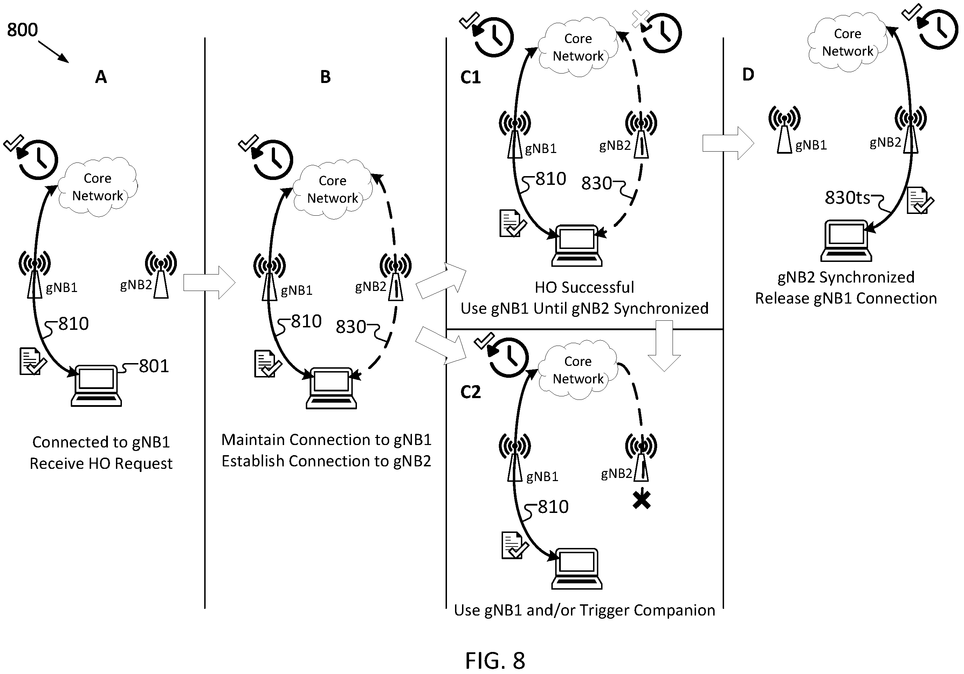

Turning now to FIG. 8, it shows a sequence 800 of frames A, B, C, and D that is similar to the scenario shown in FIG. 3, except that the handover of FIG. 8 is implemented by a smart mobility manager that uses the improved handover procedure discussed above, and in particular, with respect to FIGs. 4-7. As can be seen in Frame B of FIG. 8, instead of releasing the existing time-synchronized data connection 810 between user equipment 801 and the core network via wireless connection point gNB1, the existing time-synchronized data connection 810 while the user equipment 801 attempts to establish the new data connection 830 to the gNB2. In frame C1, even after the handover is initially successful, the new data connection 830 over gNB2 may not yet be time-synchronized so the user equipment 801 may continue to use the maintained time-synchronized data connection 810. Once the new data connection 830 over gNB2 is time-synchronized, as shown in frame D by data connection 830ts, connection 810 may be released.

If the time-synchronization is unsuccessful or, returning to frame B, if the initial handover is unsuccessful, the user equipment 801 will have failed to establish a time-synchronized data connection via gNB2. But because it has not yet released time-synchronized data connection 810, the user equipment 801 may continue to use it for TSN communications with the endpoint. If the time-synchronized connection 810 deteriorates or if the user equipment 801 suspects that it may deteriorate such that TSN communications are not possible, the user equipment 801 may send a trigger to a companion device to start controlling the endpoint for a period of time, at least until the user equipment 801 is able to re-establish a time-synchronized data connection.

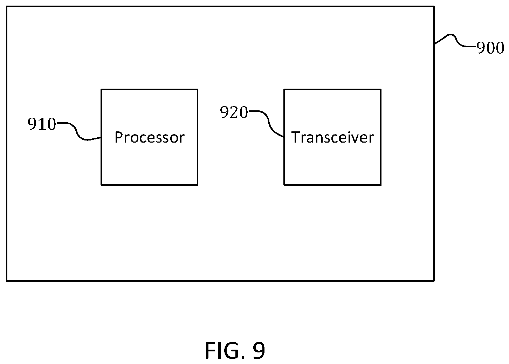

FIG. 9 shows an example of device 900 for improved handover. Without limitation, device 900 may implement any of the features described above with reference to the disclosed handover procedure for enabling handover between public cellular networks and private cellular networks and for improving handover in time-sensitive networks (e.g., with respect to flowchart 200, smart mobility system 400, smart mobility manager 500, flowchart 600, sequence diagram 700, frame sequence 800, and/or FIGs. 1-8). FIG. 9 may be implemented as a device, a system, a method, and/or a computer readable medium that, when executed, performs any of the features of the wireless charging systems described above. It should be appreciated that device 900 is merely exemplary, and this example is not intended to limit any aspect of the improved handover features discussed above.

Device 900 may be a user equipment device that includes a processor 910 configured to determine, based on the handover request, a handover decision including whether to reconfigure the device for data packet communication with a target wireless connection point over a second data communication connection. Processor 910 is also configured to initiate, based on the handover decision, an establishment of the second data communication connection with the target wireless connection point and of a time-synchronization between the target wireless connection point and the device, wherein optionally the second data communication connection may be in addition to the first data communication connection. Processor 910 is also configured to execute, if the establishment is successful, a handover of data packet communication from the first data communication connection to the second data communication connection. In addition to or in combination with any of the features of this paragraph and/or the following paragraphs, processor 910 may be further configured to receive (e.g., via transceiver 920) the handover request from the wireless connection point.

Furthermore, in addition to or in combination with any one of the features of this and/or the preceding paragraph with respect to device 900, processor 910 may be further configured to release the first data communication connection if the establishment of the second data communication connection is successful. Furthermore, in addition to or in combination with any one of the features of this and/or the preceding paragraph, processor 910 may be further configured to release the first data communication connection only if the establishment of the second data communication connection is successful. Furthermore, in addition to or in combination with any one of the features of this and/or the preceding paragraph, the first data communication connection may include a time-sensitive network (TSN) communication connection for controlling an endpoint device. Furthermore, in addition to or in combination with any one of the features of this and/or the preceding paragraph, processor 910 may be further configured to generate a message if the establishment of the new data communication is unsuccessful, wherein the message may also include an instruction to a companion device to control the endpoint device. Furthermore, in addition to or in combination with any one of the features of this and/or the preceding paragraph, the endpoint device may include at least one of a vehicle, a robot, or a piece of manufacturing equipment.

Furthermore, in addition to or in combination with any one of the features of this and/or the preceding two paragraphs with respect to device 900, the handover decision may be further based on whether the first data communication connection is a time-sensitive network (TSN) communication connection. Furthermore, in addition to or in combination with any one of the features of this and/or the preceding two paragraphs the first data communication connection and the second data communication connection may include simultaneous connections for data packet communication with the device. Furthermore, in addition to or in combination with any one of the features of this and/or the preceding two paragraphs, the handover request may include a configuration report of potential wireless connection points with which the device may establish data communication connections. Furthermore, in addition to or in combination with any one of the features of this and/or the preceding two paragraphs the configuration report may include, for each potential wireless connection point of the potential wireless connection points, a time-synchronization parameter associated with the time-synchronization. Furthermore, in addition to or in combination with any one of the features of this and/or the preceding two paragraphs, the time-synchronization parameter may include a grandmaster identifier. Furthermore, in addition to or in combination with any one of the features of this and/or the preceding two paragraphs, processor 910 may be further configured to select, as the target wireless connection point, at least one of the potential wireless connection points based on the configuration report. Furthermore, in addition to or in combination with any one of the features of this and/or the preceding two paragraphs, the configuration report may indicate whether the time-synchronization parameter is a same time-synchronization parameter of the wireless connection point.

Furthermore, in addition to or in combination with any one of the features of this and/or the preceding three paragraphs with respect to device 900, the wireless connection point and the target wireless connection point may each include a radio node of a wireless network. Furthermore, in addition to or in combination with any one of the features of this and/or the preceding three paragraphs, the wireless network may include a 5G network and the radio node may include a gNodeB. Furthermore, in addition to or in combination with any one of the features of this and/or the preceding three paragraphs the wireless connection point may belong to a public wireless network and the target wireless connection point may belong to a private wireless network. Furthermore, in addition to or in combination with any one of the features of this and/or the preceding three paragraphs, processor 910 may be further configured to determine that the target wireless connection point belongs to a private wireless network and to generate a message requesting wireless resources of the private wireless network for the second data communication connection.

Furthermore, in addition to or in combination with any one of the features of this and/or the preceding four paragraphs with respect to device 900, processor 910 may be further configured to receive (e.g., via transceiver 920) a resource response of the private wireless network indicating an allocation to the device of wireless resources of the private wireless network. Furthermore, in addition to or in combination with any one of the features of this and/or the preceding four paragraphs, the allocation to the device 900 of wireless resources may be based on a service level contract between the private wireless network and the public wireless network. Furthermore, in addition to or in combination with any one of the features of this and/or the preceding four paragraphs, processor 910 may be further configured to select the target wireless connection point from among a plurality of available wireless connection points in the private wireless networks based on a data transfer property of the wireless connection point or the target wireless connection point. Furthermore, in addition to or in combination with any one of the features of this and/or the preceding four paragraphs, the data transfer property may include at least one of a throughput, a quality of service, a latency, a channel quality, or a bandwidth. Furthermore, in addition to or in combination with any one of the features of this and/or the preceding four paragraphs, processor 910 may be further configured to determine that the target wireless connection point belongs to the private wireless network based on a network identifier of the private wireless network. Furthermore, in addition to or in combination with any one of the features of this and/or the preceding four paragraphs, the network identifier may include a mobile country code of the private wireless network. Furthermore, in addition to or in combination with any one of the features of this and/or the preceding four paragraphs, processor 910 may be further configured to receive (e.g., via transceiver 920) the network identifier in a system information broadcast message from the private wireless network.

Device 900 may alternatively be a base station device 900 that includes a processor 910 configured to transmit (e.g., via transceiver 920) a handover request to a user device with which base station device 900 is configured for data packet communication over a first data communication connection with the user device, wherein the handover request includes a configuration report of potential wireless connection points with which the user device may establish additional data communication connections, wherein the configuration report includes a time-synchronization parameter for each of the potential wireless connection points. Processor 910 may also be configured to receive (e.g., via transceiver 920) a handover decision indicating a selected one of the potential wireless connection points as a target wireless connection point for data packet communication over a second data communication connection between the user device and the target wireless connection point. Processor 910 may also be configured to terminate the first data communication connection if a handover status message indicates an establishment and time-synchronization of the second data communication connection between the user device and the target wireless connection point.

Furthermore, in addition to or in combination with any one of the features of this and/or the preceding paragraph with respect to base station device 900, the first data communication connection may include a time-sensitive network (TSN) communication connection for controlling an endpoint device. Furthermore, in addition to or in combination with any one of the features of this and/or the preceding paragraph, processor 910 may be further configured to generate an instruction to a companion device to control the endpoint device if the establishment and time-synchronization of the new data communication is unsuccessful. Furthermore, in addition to or in combination with any one of the features of this and/or the preceding paragraph, the endpoint device may include at least one of a vehicle, a robot, or a piece of manufacturing equipment. Furthermore, in addition to or in combination with any one of the features of this and/or the preceding paragraph, the first data communication connection and the second data communication connection may include simultaneous connections for data packet communication with the user device. Furthermore, in addition to or in combination with any one of the features of this and/or the preceding paragraph, the handover request may include a conditional handover request. Furthermore, in addition to or in combination with any one of the features of this and/or the preceding paragraph, the time-synchronization parameter may include a grandmaster identifier.

Furthermore, in addition to or in combination with any one of the features of this and/or the preceding two paragraphs, the base station device 900 and the target wireless connection point each may each include a radio node of a wireless network. Furthermore, in addition to or in combination with any one of the features of this and/or the preceding two paragraphs, the wireless network may include a 5G network and the radio node may include a gNodeB. Furthermore, in addition to or in combination with any one of the features of this and/or the preceding two paragraphs, base station device 900 may belong to a public wireless network and the target wireless connection point may belong to a private wireless network. Furthermore, in addition to or in combination with any one of the features of this and/or the preceding two paragraphs, processor 910 may be further configured to determine that the target wireless connection point belongs to a private wireless network and to generate a message requesting wireless resources of the private wireless network for the second data communication connection. Furthermore, in addition to or in combination with any one of the features of this and/or the preceding two paragraphs, processor is further configured to receive (e.g., via transceiver 920) a resource response of the private wireless network indicating an allocation to the user device of wireless resources of the private wireless network.

Furthermore, in addition to or in combination with any one of the features of this and/or the preceding three paragraphs, the allocation to the user device of wireless resources is based on a service level contract between the private wireless network and the public wireless network. Furthermore, in addition to or in combination with any one of the features of this and/or the preceding three paragraphs, the configuration report may further include a data transfer property of the potential target wireless connection points. Furthermore, in addition to or in combination with any one of the features of this and/or the preceding three paragraphs, the data transfer property may include at least one of a throughput, a quality of service, a latency, a channel quality, or a bandwidth. Furthermore, in addition to or in combination with any one of the features of this and/or the preceding three paragraphs, processor 910 may be further configured to determine that the target wireless connection point belongs to the private wireless network based on a network identifier of the private wireless network. Furthermore, in addition to or in combination with any one of the features of this and/or the preceding three paragraphs, the network identifier may include a mobile country code of the private wireless network. Furthermore, in addition to or in combination with any one of the features of this and/or the preceding three paragraphs, processor 910 may be further configured to receive (e.g., via transceiver 920) the network identifier in a system information broadcast message from the private wireless network.

Furthermore, in addition to or in combination with any one of the features of this and/or the preceding four paragraphs, the allocation may be associated with a usage limitation/guarantee of the wireless resources, wherein the usage limitation/guarantee may include at least one of a throughput, a quality of service, a latency, a channel quality, or a bandwidth. Furthermore, in addition to or in combination with any one of the features of this and/or the preceding four paragraphs, processor 910 may be configured to perform network slicing to provide the usage limitation/guarantee. Furthermore, in addition to or in combination with any one of the features of this and/or the preceding four paragraphs, the allocation may be associated with an accessibility limitation to informational assets within the private wireless network.

Device 900 may alternatively be a base station device that includes a processor 910 configured to receive (e.g., via transceiver 920) a request for allocating to a user device wireless resources of the base station device 900, wherein the base station device 900 belongs to a private wireless network. Processor 910 is also configured to determine a registration status of the user device, wherein the registration status indicates whether the user device is a registered device or a guest device with respect to the private wireless network. Processor 910 is also configured to determine, based on the request and the registration status, an allocation of the wireless resources of the base station device 900, wherein the allocation is based on a service level contract between the private wireless network and the public wireless network. Processor 910 is also configured to transmit (e.g., via transceiver 920) the allocation to the user device.

Furthermore, in addition to or in combination with any one of the features of this and/or the preceding paragraph, processor 910 may be further configured to determine the registration status based on an identifier of the user device. Furthermore, in addition to or in combination with any one of the features of this and/or the preceding paragraph, processor 910 may be further configured to transmit (e.g., via transceiver 920) to the user device a network identifier in a system information broadcast message. Furthermore, in addition to or in combination with any one of the features of this and/or the preceding paragraph, the network identifier may include a mobile country code of the private wireless network. Furthermore, in addition to or in combination with any one of the features of this and/or the preceding paragraph, the mobile country code may include 999. Furthermore, in addition to or in combination with any one of the features of this and/or the preceding paragraph, the allocation may be associated with a usage limitation/guarantee of the wireless resources, wherein the usage limitation/guarantee may include at least one of a throughput, a quality of service, a latency, a channel quality, or a bandwidth. Furthermore, in addition to or in combination with any one of the features of this and/or the preceding paragraph, processor 910 may be configured to perform network slicing to provide the usage limitation/guarantee. Furthermore, in addition to or in combination with any one of the features of this and/or the preceding paragraph, the allocation may be associated with an accessibility limitation to informational assets within the private wireless network.

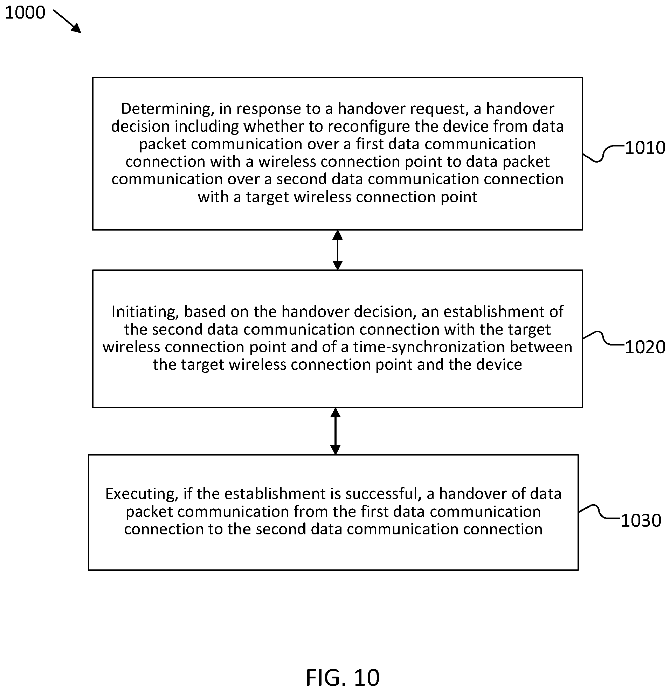

FIGs. 10-12 each depict a schematic flow diagram of a method (e.g., method 1000, method 1100, method 1200) for improved handover that enables handover between public cellular networks and private cellular networks and/or that improves handover in time-sensitive networks. Method 1000, method 1100, and method 1200 may implement any of the features described above with reference to the disclosed improved handover with respect to flowchart 200, smart mobility system 400, smart mobility manager 500, flowchart 600, sequence diagram 700, frame sequence 800, device 900, and/or FIGs. 1-9).

With respect to FIG. 10, method 1000 includes, in 1010, determining, based on the handover request, a handover decision including whether to reconfigure the device from data packet communication over a first data communication connection with a wireless connection point to data packet communication over a second data communication connection with a target wireless connection point. Method 1000 also includes, in 1020, initiating, based on the handover decision, an establishment of the second data communication connection with the target wireless connection point and of a time-synchronization between the target wireless connection point and the device. The second data communication connection may be in addition to the first data communication connection. Method 1000 also includes, in 1030, executing, if the establishment is successful, a handover of data packet communication from the first data communication connection to the second data communication connection.

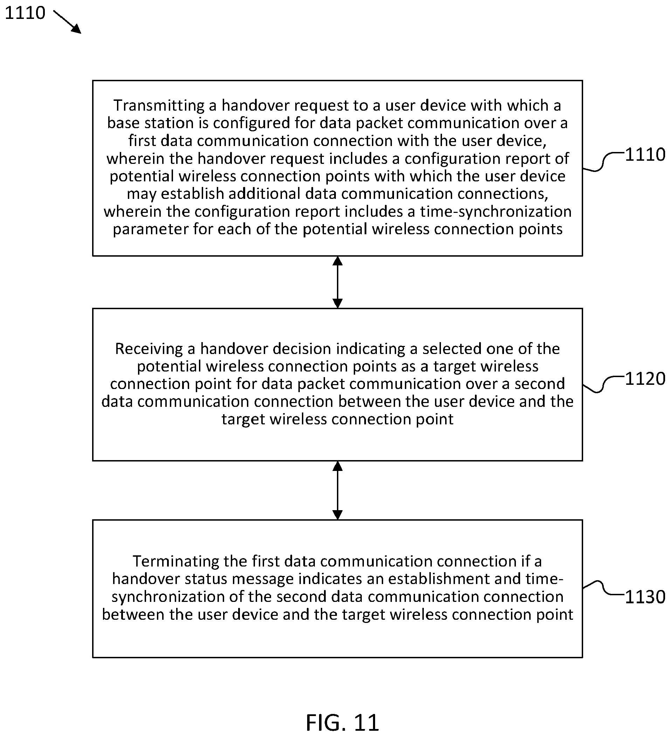

With respect to FIG. 11, method 1100 includes, in 1110, transmitting a handover request to a user device with which a base station is configured for data packet communication over a first data communication connection with the user device, wherein the handover request includes a configuration report of potential wireless connection points with which the user device may establish additional data communication connections, wherein the configuration report includes a time-synchronization parameter for each of the potential wireless connection points. Method 1100 also includes, in 1120, receiving a handover decision indicating a selected one of the potential wireless connection points as a target wireless connection point for data packet communication over a second data communication connection between the user device and the target wireless connection point. Method 1100 also includes, in 1130, terminating the first data communication connection if a handover status message indicates an establishment and time-synchronization of the second data communication connection between the user device and the target wireless connection point.

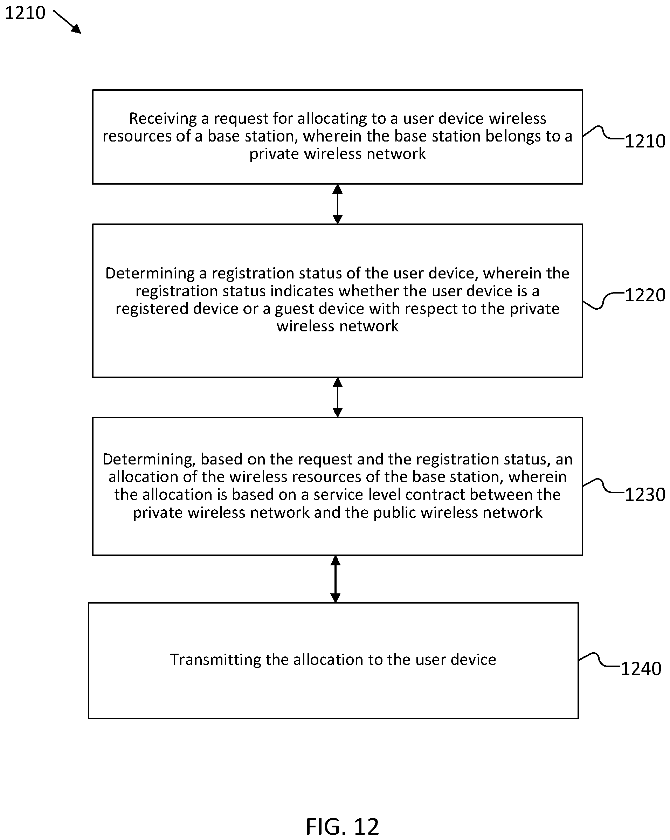

With respect to FIG. 12, method 1200 includes, in 1210, receiving a request for allocating to a user device wireless resources of a base station, wherein the base station belongs to a private wireless network. Method 1200 also includes, in 1220, determining a registration status of the user device, wherein the registration status indicates whether the user device is a registered device or a guest device with respect to the private wireless network. Method 1200 also includes, in 1230, determining, based on the request and the registration status, an allocation of the wireless resources of the base station, wherein the allocation is based on a service level contract between the private wireless network and the public wireless network. Method 1200 also includes, in 1240, transmitting the allocation to the user device.

In the following, various examples are provided that may include one or more aspects described above with reference to features of the improved handover discussed above with respect, for example, flowchart 200, smart mobility system 400, smart mobility manager 500, flowchart 600, sequence diagram 700, frame sequence 800, device 900, methods 1000-1200, and/or FIGs. 1-12. The examples provided in relation to the devices may apply also to the described method(s), and vice versa.

Example 1 is a device including a processor configured to determine, in response to a handover request, a handover decision including whether to reconfigure the device from data packet communication over a first data communication connection with a wireless connection point to data packet communication over a second data communication connection with a target wireless connection point. The processor is also configured to initiate, based on the handover decision, an establishment of the second data communication connection with the target wireless connection point and of a time-synchronization between the target wireless connection point and the device, wherein optionally the second data communication connection may be in addition to the first data communication connection. The processor is also configured to execute, if the establishment is successful, a handover of data packet communication from the first data communication connection to the second data communication connection.

Example 2 is the device of example 1, wherein the processor is further configured to release the first data communication connection if the establishment of the second data communication connection is successful.

Example 3 is the device of either of examples 1 or 2, wherein the processor is further configured to release the first data communication connection only if the establishment of the second data communication connection is successful.

Example 4 is the device of any one of examples 1 to 3, wherein the first data communication connection includes a time-sensitive network (TSN) communication connection for controlling an endpoint device.

Example 5 is the device of example 4, wherein the processor is further configured to generate a message if the establishment of the new data communication is unsuccessful, wherein the message includes an instruction to a companion device to control the endpoint device.

Example 6 is the device of either of examples 4 or 5, wherein the endpoint device includes at least one of a vehicle, a robot, or a piece of manufacturing equipment.

Example 7 is the device of any one of examples 1 to 6, wherein the handover decision is further based on whether the first data communication connection is a time-sensitive network (TSN) communication connection.

Example 8 is the device of any one of examples 1 to 7, wherein the processor is further configured to receive the handover request from the wireless connection point.

Example 9 is the device of any one of examples 1 to 8, wherein the first data communication connection and the second data communication connection include simultaneous connections for data packet communication with the device.

Example 10 is the device of any one of examples 1 to 9, wherein the handover request includes a configuration report of potential wireless connection points with which the device may establish data communication connections.

Example 11 is the device of example 10, wherein the configuration report includes, for each potential wireless connection point of the potential wireless connection points, a time-synchronization parameter associated with the time-synchronization.

Example 12 is the device of example 11, wherein the time-synchronization parameter includes a grandmaster identifier.

Example 13 is the device of any one of examples 10 to 12, wherein the processor is further configured to select, as the target wireless connection point, at least one of the potential wireless connection points based on the configuration report.

Example 14 is the device of example 13, wherein the configuration report indicates whether the time-synchronization parameter is a same time-synchronization parameter of the wireless connection point.

Example 15 is the device of any one of examples 1 to 14, wherein the wireless connection point and the target wireless connection point each include a radio node of a wireless network.

Example 16 is the device of example 15, wherein the wireless network includes a 5G network and the radio node includes a gNodeB.

Example 17 is the device of any one of examples 1 to 16, wherein the wireless connection point belongs to a public wireless network and the target wireless connection point belongs to a private wireless network.

Example 18 is the device of any one of examples 1 to 17, wherein the processor is further configured to determine that the target wireless connection point belongs to a private wireless network and to generate a message requesting wireless resources of the private wireless network for the second data communication connection.

Example 19 is the device of either of examples 17 or 18, wherein the processor is further configured to receive a resource response of the private wireless network indicating an allocation to the device of wireless resources of the private wireless network.

Example 20 is the device of example 19, wherein the allocation to the device of wireless resources is based on a service level contract between the private wireless network and the public wireless network.

Example 21 is the device of either of examples 19 or 20, wherein the processor is further configured to select the target wireless connection point from among a plurality of available wireless connection points in the private wireless networks based on a data transfer property of the wireless connection point or the target wireless connection point.

Example 22 is the device of example 21, wherein the data transfer property includes at least one of a throughput, a quality of service, a latency, a channel quality, or a bandwidth.

Example 23 is the device of any one of examples 19 to 22, wherein the processor is further configured to determine that the target wireless connection point belongs to the private wireless network based on a network identifier of the private wireless network.

Example 24 is the device of example 23, wherein the network identifier includes a mobile country code of the private wireless network.

Example 25 is the device of either of examples 23 or 24, wherein the processor is further configured to receive the network identifier in a system information broadcast message from the private wireless network.

Example 26 is a base station including a processor configured to transmit a handover request to a user device with which the base station is configured for data packet communication over a first data communication connection with the user device, wherein the handover request includes a configuration report of potential wireless connection points with which the user device may establish additional data communication connections, wherein the configuration report includes a time-synchronization parameter for each of the potential wireless connection points. The processor is also configured to receive a handover decision indicating a selected one of the potential wireless connection points as a target wireless connection point for data packet communication over a second data communication connection between the user device and the target wireless connection point. The processor is also configured to terminate the first data communication connection if a handover status message indicates an establishment and time-synchronization of the second data communication connection between the user device and the target wireless connection point.

Example 27 is the base station of example 26, wherein the first data communication connection includes a time-sensitive network (TSN) communication connection for controlling an endpoint device.

Example 28 is the base station of example 27, wherein the processor is further configured to generate an instruction to a companion device to control the endpoint device if the establishment and time-synchronization of the new data communication is unsuccessful.

Example 29 is the base station of either of examples 27 or 28, wherein the endpoint device includes at least one of a vehicle, a robot, or a piece of manufacturing equipment.

Example 30 is the base station of any one of examples 26 to 29, wherein the first data communication connection and the second data communication connection include simultaneous connections for data packet communication with the user device.

Example 31 is the base station of any one of examples 26 to 30, wherein the handover request includes a conditional handover request.

Example 32 is the base station of example 26 to 31, wherein the time-synchronization parameter includes a grandmaster identifier.

Example 33 is the base station of any one of examples 26 to 32, wherein the base station and the target wireless connection point each include a radio node of a wireless network.

Example 34 is the base station of example 33, wherein the wireless network includes a 5G network and the radio node includes a gNodeB.

Example 35 is the base station of any one of examples 26 to 34, wherein the base station belongs to a public wireless network and the target wireless connection point belongs to a private wireless network.

Example 36 is the base station of any one of examples 26 to 35, wherein the processor is further configured to determine that the target wireless connection point belongs to a private wireless network and to generate a message requesting wireless resources of the private wireless network for the second data communication connection.

Example 37 is the base station of either of examples 35 or 36, wherein the processor is further configured to receive a resource response of the private wireless network indicating an allocation to the user device of wireless resources of the private wireless network.

Example 38 is the base station of example 37, wherein the allocation to the user device of wireless resources is based on a service level contract between the private wireless network and the public wireless network.

Example 39 is the base station of either of examples 37 or 38, wherein the configuration report further includes a data transfer property of the potential target wireless connection points.

Example 40 is the base station of example 39, wherein the data transfer property includes at least one of a throughput, a quality of service, a latency, a channel quality, or a bandwidth.

Example 41 is the base station of any one of examples 37 to 40, wherein the processor is further configured to determine that the target wireless connection point belongs to the private wireless network based on a network identifier of the private wireless network.

Example 42 is the base station of example 41, wherein the network identifier includes a mobile country code of the private wireless network.

Example 43 is the base station of either of examples 41 or 42, wherein the processor is further configured to receive the network identifier in a system information broadcast message from the private wireless network.

Example 44 is the base station of any one of examples 37 to 43, wherein the allocation is associated with a usage limitation/guarantee of the wireless resources, wherein the usage limitation/guarantee includes at least one of a throughput, a quality of service, a latency, a channel quality, or a bandwidth.

Example 45 is the base station of example 44, wherein the processor is configured to perform network slicing to provide the usage limitation/guarantee.

Example 46 is the base station of any one of examples 37 to 45, wherein the allocation is associated with an accessibility limitation to informational assets within the private wireless network.

Example 47 is a base station including a processor configured to receive a request for allocating to a user device wireless resources of the base station, wherein the base station belongs to a private wireless network. The processor is also configured to determine a registration status of the user device, wherein the registration status indicates whether the user device is a registered device or a guest device with respect to the private wireless network. The processor is also configured to determine, based on the request and the registration status, an allocation of the wireless resources of the base station, wherein the allocation is based on a service level contract between the private wireless network and the public wireless network. The processor is also configured to transmit the allocation to the user device.

Example 47 is the base station of example 45, wherein the processor is further configured to determine the registration status based on an identifier of the user device.

Example 48 is the base station of either of examples 47 or 47, wherein the processor is further configured to transmit to the user device a network identifier in a system information broadcast message.

Example 49 is the base station of example 48, wherein the network identifier includes a mobile country code of the private wireless network.

Example 50 is the base station of example 49, wherein the mobile country code includes 999.

Example 51 is the base station of any one of examples 47 to 50, wherein the allocation is associated with a usage limitation/guarantee of the wireless resources, wherein the usage limitation/guarantee includes at least one of a throughput, a quality of service, a latency, a channel quality, or a bandwidth.

Example 52 is the base station of example 51, wherein the processor is configured to perform network slicing to provide the usage limitation/guarantee.

Example 53 is the base station of any one of examples 47 to 52, wherein the allocation is associated with an accessibility limitation to informational assets within the private wireless network.

Example 54 is a method including determining, in response to a handover request, a handover decision including whether to reconfigure a device from data packet communication over a first data communication connection with a wireless connection point to data packet communication over a second data communication connection with a target wireless connection point. The method also includes initiating, based on the handover decision, an establishment of the second data communication connection with the target wireless connection point and of a time-synchronization between the target wireless connection point and the device, wherein optionally the second data communication connection may be in addition to the first data communication connection. The method also includes executing, if the establishment is successful, a handover of data packet communication from the first data communication connection to the second data communication connection.

Example 48 is the method of example 47, wherein the method further includes releasing the first data communication connection if the establishment of the second data communication connection is successful.

Example 49 is the method of either of examples 47 or 48, wherein the method further includes releasing the first data communication connection only if the establishment of the second data communication connection is successful.

Example 50 is the method of any one of examples 47 to 49, wherein the first data communication connection includes a time-sensitive network (TSN) communication connection for controlling an endpoint device.

Example 51 is the method of example 50, wherein the method further includes generating a message if the establishment of the new data communication is unsuccessful, wherein the message includes an instruction to a companion device to control the endpoint device.

Example 52 is the method of either of examples 50 or 51, wherein the endpoint device includes at least one of a vehicle, a robot, or a piece of manufacturing equipment.

Example 53 is the method of any one of examples 47 to 52, the method further including receiving the handover request from the wireless connection point.

Example 54 is the method of any one of examples 47 to 53, wherein the handover decision is further based on whether the first data communication connection is a time-sensitive network (TSN) communication connection.

Example 55 is the method of any one of examples 47 to 54, wherein the first data communication connection and the second data communication connection include simultaneous connections for data packet communication with the device.

Example 56 is the method of any one of examples 47 to 55, wherein the handover request includes a configuration report of potential wireless connection points with which the device may establish data communication connections.

Example 57 is the method of example 56, wherein the configuration report includes, for each potential wireless connection point of the potential wireless connection points, a time-synchronization parameter associated with the time-synchronization.

Example 58 is the method of example 57, wherein the time-synchronization parameter includes a grandmaster identifier.

Example 59 is the method of any one of examples 56 to 58, wherein the method further includes selecting, as the target wireless connection point, at least one of the potential wireless connection points based on the configuration report.

Example 60 is the method of example 59, wherein the configuration report indicates whether the time-synchronization parameter is a same time-synchronization parameter of the wireless connection point.

Example 61 is the method of any one of examples 47 to 60, wherein the wireless connection point and the target wireless connection point each include a radio node of a wireless network.

Example 62 is the method of example 61, wherein the wireless network includes a 5G network and the radio node includes a gNodeB.

Example 63 is the method of any one of examples 47 to 62, wherein the wireless connection point belongs to a public wireless network and the target wireless connection point belongs to a private wireless network.

Example 64 is the method of any one of examples 47 to 63, wherein the method further includes determining that the target wireless connection point belongs to a private wireless network and generating a message requesting wireless resources of the private wireless network for the second data communication connection.

Example 65 is the method of either of examples 63 or 64, wherein the method further includes receiving a resource response of the private wireless network indicating an allocation to the device of wireless resources of the private wireless network.

Example 66 is the method of example 65, wherein the allocation to the device of wireless resources is based on a service level contract between the private wireless network and the public wireless network.

Example 67 is the method of either of examples 65 or 66, wherein the method further includes selecting the target wireless connection point from among a plurality of available wireless connection points in the private wireless networks based on a data transfer property of the wireless connection point or the target wireless connection point.

Example 68 is the method of example 67, wherein the data transfer property includes at least one of a throughput, a quality of service, a latency, a channel quality, or a bandwidth.

Example 69 is the method of any one of examples 65 to 68, wherein the method further includes determining that the target wireless connection point belongs to the private wireless network based on a network identifier of the private wireless network.

Example 70 is the method of example 69, wherein the network identifier includes a mobile country code of the private wireless network.

Example 71 is the method of either of examples 69 or 70, wherein the method further includes receiving the network identifier in a system information broadcast message from the private wireless network.

Example 72 is a method including transmitting a handover request to a user device with which a base station is configured for data packet communication over a first data communication connection with the user device, wherein the handover request includes a configuration report of potential wireless connection points with which the user device may establish additional data communication connections, wherein the configuration report includes a time-synchronization parameter for each of the potential wireless connection points. The method also includes receiving a handover decision indicating a selected one of the potential wireless connection points as a target wireless connection point for data packet communication over a second data communication connection between the user device and the target wireless connection point. The method also includes terminating the first data communication connection if a handover status message indicates an establishment and time-synchronization of the second data communication connection between the user device and the target wireless connection point.

Example 73 is the method of example 72, wherein the first data communication connection includes a time-sensitive network (TSN) communication connection for controlling an endpoint device.

Example 74 is the method of example 73, wherein the method further includes generating an instruction to a companion device to control the endpoint device if the establishment and time-synchronization of the new data communication is unsuccessful.

Example 75 is the method of either of examples 73 or 74, wherein the endpoint device includes at least one of a vehicle, a robot, or a piece of manufacturing equipment.

Example 76 is the method of any one of examples 72 to 75, wherein the first data communication connection and the second data communication connection include simultaneous connections for data packet communication with the user device.

Example 77 is the method of any one of examples 72 to 76, wherein the handover request includes a conditional handover request.

Example 78 is the method of example 72 to 77, wherein the time-synchronization parameter includes a grandmaster identifier.

Example 79 is the method of any one of examples 72 to 78, wherein the base station and the target wireless connection point each include a radio node of a wireless network.

Example 80 is the method of example 79, wherein the wireless network includes a 5G network and the radio node includes a gNodeB.

Example 81 is the method of any one of examples 72 to 80, wherein the base station belongs to a public wireless network and the target wireless connection point belongs to a private wireless network.

Example 82 is the method of any one of examples 72 to 81, wherein the method further includes determining that the target wireless connection point belongs to a private wireless network and generating a message requesting wireless resources of the private wireless network for the second data communication connection.

Example 83 is the method of either of examples 81 or 82, wherein the method further includes receiving a resource response of the private wireless network indicating an allocation to the user device of wireless resources of the private wireless network.

Example 84 is the method of example 83, wherein the allocation to the user device of wireless resources is based on a service level contract between the private wireless network and the public wireless network.

Example 85 is the method of either of examples 83 or 84, wherein the configuration report further includes a data transfer property of the potential target wireless connection points.

Example 86 is the method of example 85, wherein the data transfer property includes at least one of a throughput, a quality of service, a latency, a channel quality, or a bandwidth.

Example 87 is the method of any one of examples 83 to 86, wherein the method further includes determining that the target wireless connection point belongs to the private wireless network based on a network identifier of the private wireless network.

Example 88 is the method of example 87, wherein the network identifier includes a mobile country code of the private wireless network.

Example 89 is the method of either of examples 87 or 88, wherein the method further includes receiving the network identifier in a system information broadcast message from the private wireless network.

Example 90 is the method of any one of examples 83 to 89, wherein the allocation is associated with a usage limitation/guarantee of the wireless resources, wherein the usage limitation/guarantee includes at least one of a throughput, a quality of service, a latency, a channel quality, or a bandwidth.

Example 91 is the method of example 90, wherein the method further includes performing network slicing to provide the usage limitation/guarantee.

Example 92 is the method of any one of examples 83 to 91, wherein the allocation is associated with an accessibility limitation to informational assets within the private wireless network.

Example 93 is a method including receiving a request for allocating to a user device wireless resources of a base station, wherein the base station belongs to a private wireless network. The method also includes determining a registration status of the user device, wherein the registration status indicates whether the user device is a registered device or a guest device with respect to the private wireless network. The method also includes determining, based on the request and the registration status, an allocation of the wireless resources of the base station, wherein the allocation is based on a service level contract between the private wireless network and the public wireless network. The method also includes transmitting the allocation to the user device.

Example 93 is the method of example 91, wherein the method further includes determining the registration status based on an identifier of the user device.

Example 94 is the method of either of examples 93 or 93, wherein the method further includes transmitting to the user device a network identifier in a system information broadcast message.

Example 95 is the method of example 94, wherein the network identifier includes a mobile country code of the private wireless network.

Example 96 is the method of example 95, wherein the mobile country code includes 999.

Example 97 is the method of any one of examples 93 to 96, wherein the allocation is associated with a usage limitation/guarantee of the wireless resources, wherein the usage limitation/guarantee includes at least one of a throughput, a quality of service, a latency, a channel quality, or a bandwidth.

Example 98 is the method of example 97, wherein the method also includes performing network slicing to provide the usage limitation/guarantee.

Example 99 is the method of any one of examples 93 to 98, wherein the allocation is associated with an accessibility limitation to informational assets within the private wireless network.

Example 100 is a non-transitory computer readable medium that includes instructions, which if executed, cause one or more processors to determine, in response to a handover request, a handover decision including whether to reconfigure a user equipment device from data packet communication over a first data communication connection with a wireless connection point to data packet communication over a second data communication connection with a target wireless connection point. The instructions also cause the one or more processors to initiate, based on the handover decision, an establishment of the second data communication connection with the target wireless connection point and of a time-synchronization between the target wireless connection point and the user equipment device, wherein optionally the second data communication connection may be in addition to the first data communication connection. The instructions also cause the one or more processors to execute, if the establishment is successful, a handover of data packet communication from the first data communication connection to the second data communication connection.

Example 94 is the non-transitory computer readable medium of example 93, wherein the instructions further cause the one or more processors to release the first data communication connection if the establishment of the second data communication connection is successful.

Example 95 is the non-transitory computer readable medium of either of examples 93 or 94, wherein the instructions further cause the one or more processors to release the first data communication connection only if the establishment of the second data communication connection is successful.

Example 96 is the non-transitory computer readable medium of any one of examples 93 to 95, wherein the first data communication connection includes a time-sensitive network (TSN) communication connection for controlling an endpoint device.

Example 97 is the non-transitory computer readable medium of example 96, wherein the instructions further cause the one or more processors to generate a message if the establishment of the new data communication is unsuccessful, wherein the message includes an instruction to a companion device to control the endpoint device.

Example 98 is the non-transitory computer readable medium of either of examples 96 or 97, wherein the endpoint device includes at least one of a vehicle, a robot, or a piece of manufacturing equipment.

Example 99 is the non-transitory computer readable medium of any one of examples 93 to 98, wherein the instructions further cause the one or more processors to receive the handover request from the wireless connection point.

Example 100 is the non-transitory computer readable medium of any one of examples 93 to 99, wherein the handover decision is further based on whether the first data communication connection is a time-sensitive network (TSN) communication connection.

Example 101 is the non-transitory computer readable medium of any one of examples 93 to 100, wherein the first data communication connection and the second data communication connection include simultaneous connections for data packet communication with the user equipment device.

Example 102 is the non-transitory computer readable medium of any one of examples 93 to 101, wherein the handover request includes a configuration report of potential wireless connection points with which the user equipment device may establish data communication connections.

Example 103 is the non-transitory computer readable medium of example 102, wherein the configuration report includes, for each potential wireless connection point of the potential wireless connection points, a time-synchronization parameter associated with the time-synchronization.

Example 104 is the non-transitory computer readable medium of example 103, wherein the time-synchronization parameter includes a grandmaster identifier.

Example 105 is the non-transitory computer readable medium of any one of examples 102 to 104, wherein the instructions further cause the one or more processors to select, as the target wireless connection point, at least one of the potential wireless connection points based on the configuration report.

Example 106 is the non-transitory computer readable medium of example 105, wherein the configuration report indicates whether the time-synchronization parameter is a same time-synchronization parameter of the wireless connection point.

Example 107 is the non-transitory computer readable medium of any one of examples 93 to 106, wherein the wireless connection point and the target wireless connection point each include a radio node of a wireless network.

Example 108 is the non-transitory computer readable medium of example 107, wherein the wireless network includes a 5G network and the radio node includes a gNodeB.

Example 109 is the non-transitory computer readable medium of any one of examples 93 to 108, wherein the wireless connection point belongs to a public wireless network and the target wireless connection point belongs to a private wireless network.

Example 110 is the non-transitory computer readable medium of any one of examples 93 to 109, wherein the instructions further cause the one or more processors to determine that the target wireless connection point belongs to a private wireless network and to generate a message requesting wireless resources of the private wireless network for the second data communication connection.

Example 111 is the non-transitory computer readable medium of either of examples 109 or 110, wherein the instructions further cause the one or more processors to receive a resource response of the private wireless network indicating an allocation to the user equipment device of wireless resources of the private wireless network.

Example 112 is the non-transitory computer readable medium of example 111, wherein the allocation to the user equipment device of wireless resources is based on a service level contract between the private wireless network and the public wireless network.

Example 113 is the non-transitory computer readable medium of either of examples 111 or 112, wherein the instructions further cause the one or more processors to select the target wireless connection point from among a plurality of available wireless connection points in the private wireless networks based on a data transfer property of the wireless connection point or the target wireless connection point.

Example 114 is the non-transitory computer readable medium of example 113, wherein the data transfer property includes at least one of a throughput, a quality of service, a latency, a channel quality, or a bandwidth.

Example 115 is the non-transitory computer readable medium of any one of examples 111 to 114, wherein the instructions further cause the one or more processors to determine that the target wireless connection point belongs to the private wireless network based on a network identifier of the private wireless network.

Example 116 is the non-transitory computer readable medium of example 115, wherein the network identifier includes a mobile country code of the private wireless network.

Example 117 is the non-transitory computer readable medium of either of examples 115 or 116, wherein the instructions further cause the one or more processors to receive the network identifier in a system information broadcast message from the private wireless network.

Example 118 is a non-transitory computer readable medium that includes instructions, which if executed, cause one or more processors to transmit a handover request to a user device with which a base station is configured for data packet communication over a first data communication connection with the user device, wherein the handover request includes a configuration report of potential wireless connection points with which the user device may establish additional data communication connections, wherein the configuration report includes a time-synchronization parameter for each of the potential wireless connection points. The instructions also cause the one or more processors to receive a handover decision indicating a selected one of the potential wireless connection points as a target wireless connection point for data packet communication over a second data communication connection between the user device and the target wireless connection point. The instructions also cause the one or more processors to terminate the first data communication connection if a handover status message indicates an establishment and time-synchronization of the second data communication connection between the user device and the target wireless connection point.

Example 119 is the non-transitory computer readable medium of example 118, wherein the first data communication connection includes a time-sensitive network (TSN) communication connection for controlling an endpoint device.

Example 120 is the non-transitory computer readable medium of example 119, wherein the instructions also cause the one or more processors to generate an instruction to a companion device to control the endpoint device if the establishment and time-synchronization of the new data communication is unsuccessful.

Example 121 is the non-transitory computer readable medium of either of examples 119 or 120, wherein the endpoint device includes at least one of a vehicle, a robot, or a piece of manufacturing equipment.

Example 122 is the non-transitory computer readable medium of any one of examples 118 to 121, wherein the first data communication connection and the second data communication connection include simultaneous connections for data packet communication with the user device.

Example 123 is the non-transitory computer readable medium of any one of examples 118 to 122, wherein the handover request includes a conditional handover request.

Example 124 is the non-transitory computer readable medium of example 118 to 123, wherein the time-synchronization parameter includes a grandmaster identifier.

Example 125 is the non-transitory computer readable medium of any one of examples 118 to 124, wherein the base station and the target wireless connection point each include a radio node of a wireless network.

Example 126 is the non-transitory computer readable medium of example 125, wherein the wireless network includes a 5G network and the radio node includes a gNodeB.

Example 127 is the non-transitory computer readable medium of any one of examples 118 to 126, wherein the base station belongs to a public wireless network and the target wireless connection point belongs to a private wireless network.

Example 128 is the non-transitory computer readable medium of any one of examples 118 to 127, wherein the instructions also cause the one or more processors to determine that the target wireless connection point belongs to a private wireless network and to generate a message requesting wireless resources of the private wireless network for the second data communication connection.

Example 129 is the non-transitory computer readable medium of either of examples 127 or 128, wherein the instructions also cause the one or more processors to receive a resource response of the private wireless network indicating an allocation to the user device of wireless resources of the private wireless network.

Example 130 is the non-transitory computer readable medium of example 129, wherein the allocation to the user device of wireless resources is based on a service level contract between the private wireless network and the public wireless network.

Example 131 is the non-transitory computer readable medium of either of examples 129 or 130, wherein the configuration report further includes a data transfer property of the potential target wireless connection points.

Example 132 is the non-transitory computer readable medium of example 131, wherein the data transfer property includes at least one of a throughput, a quality of service, a latency, a channel quality, or a bandwidth.

Example 133 is the non-transitory computer readable medium of any one of examples 129 to 132, wherein the instructions also cause the one or more processors to determine that the target wireless connection point belongs to the private wireless network based on a network identifier of the private wireless network.

Example 134 is the non-transitory computer readable medium of example 133, wherein the network identifier includes a mobile country code of the private wireless network.

Example 135 is the non-transitory computer readable medium of either of examples 133 or 134, wherein the instructions also cause the one or more processors to receive the network identifier in a system information broadcast message from the private wireless network.

Example 136 is the non-transitory computer readable medium of any one of examples 129 to 135, wherein the allocation is associated with a usage limitation/guarantee of the wireless resources, wherein the usage limitation/guarantee includes at least one of a throughput, a quality of service, a latency, a channel quality, or a bandwidth.

Example 137 is the non-transitory computer readable medium of example 136, wherein the instructions also cause the one or more processors to perform network slicing to provide the usage limitation/guarantee.

Example 138 is the non-transitory computer readable medium of any one of examples 129 to 137, wherein the allocation is associated with an accessibility limitation to informational assets within the private wireless network.

Example 139 is a non-transitory computer readable medium that includes instructions, which if executed, cause one or more processors to receive a request for allocating to a user device wireless resources of a base station, wherein the base station belongs to a private wireless network. The instructions also cause the one or more processors to determine a registration status of the user device, wherein the registration status indicates whether the user device is a registered device or a guest device with respect to the private wireless network. The instructions also cause the one or more processors to determine, based on the request and the registration status, an allocation of the wireless resources of the base station, wherein the allocation is based on a service level contract between the private wireless network and the public wireless network. The instructions also cause the one or more processors to transmit the allocation to the user device.

Example 139 is the non-transitory computer readable medium of example 137, wherein the instructions also cause the one or more processors to determine the registration status based on an identifier of the user device.

Example 140 is the non-transitory computer readable medium of either of examples 139 or 139, wherein the instructions also cause the one or more processors to transmit to the user device a network identifier in a system information broadcast message.

Example 141 is the non-transitory computer readable medium of example 140, wherein the network identifier includes a mobile country code of the private wireless network.

Example 142 is the non-transitory computer readable medium of example 141, wherein the mobile country code includes 999.

Example 143 is the non-transitory computer readable medium of any one of examples 139 to 142, wherein the allocation is associated with a usage limitation/guarantee of the wireless resources, wherein the usage limitation/guarantee includes at least one of a throughput, a quality of service, a latency, a channel quality, or a bandwidth.

Example 144 is the non-transitory computer readable medium of example 143, wherein the instructions also cause the one or more processors to perform network slicing to provide the usage limitation/guarantee.

Example 145 is the non-transitory computer readable medium of any one of examples 139 to 144, wherein the allocation is associated with an accessibility limitation to informational assets within the private wireless network.

Example 146 is a device including a means for determining, based on the handover request, a handover decision including whether to reconfigure the device from data packet communication over a first data communication connection with a wireless connection point to data packet communication over a second data communication connection with a target wireless connection point. The device also includes a means for initiating, based on the handover decision, an establishment of the second data communication connection with the target wireless connection point and of a time-synchronization between the target wireless connection point and the device, wherein optionally the second data communication connection may be in addition to the first data communication connection. The device also includes a means for executing, if the establishment is successful, a handover of data packet communication from the first data communication connection to the second data communication connection.

Example 140 is the device of example 139, wherein the device further includes a means for releasing the first data communication connection if the establishment of the second data communication connection is successful.

Example 141 is the device of either of examples 139 or 140, wherein the device further includes a means for releasing the first data communication connection only if the establishment of the second data communication connection is successful.

Example 142 is the device of any one of examples 139 to 141, wherein the first data communication connection includes a time-sensitive network (TSN) communication connection for controlling an endpoint device.

Example 143 is the device of example 142, wherein the device further includes a means for generating a message if the establishment of the new data communication is unsuccessful, wherein the message includes an instruction to a companion device to control the endpoint device.

Example 144 is the device of either of examples 142 or 143, wherein the endpoint device includes at least one of a vehicle, a robot, or a piece of manufacturing equipment.

Example 145 is the device of any one of examples 139 to 144, wherein the device further includes a means for receiving the handover request from the wireless connection point.

Example 146 is the device of any one of examples 139 to 145, wherein the handover decision is further based on whether the first data communication connection is a time-sensitive network (TSN) communication connection.

Example 147 is the device of any one of examples 139 to 146, wherein the first data communication connection and the second data communication connection include simultaneous connections for data packet communication with the device.

Example 148 is the device of any one of examples 139 to 147, wherein the handover request includes a configuration report of potential wireless connection points with which the device may establish data communication connections.

Example 149 is the device of example 148, wherein the configuration report includes, for each potential wireless connection point of the potential wireless connection points, a time-synchronization parameter associated with the time-synchronization.

Example 150 is the device of example 149, wherein the time-synchronization parameter includes a grandmaster identifier.

Example 151 is the device of any one of examples 148 to 150, wherein the device further includes a means for selecting, as the target wireless connection point, at least one of the potential wireless connection points based on the configuration report.

Example 152 is the device of example 151, wherein the configuration report indicates whether the time-synchronization parameter is a same time-synchronization parameter of the wireless connection point.

Example 153 is the device of any one of examples 139 to 152, wherein the wireless connection point and the target wireless connection point each include a radio node of a wireless network.

Example 154 is the device of example 153, wherein the wireless network includes a 5G network and the radio node includes a gNodeB.

Example 155 is the device of any one of examples 139 to 154, wherein the wireless connection point belongs to a public wireless network and the target wireless connection point belongs to a private wireless network.

Example 156 is the device of any one of examples 139 to 155, wherein the device further includes a means for determining that the target wireless connection point belongs to a private wireless network and a means for generating a message requesting wireless resources of the private wireless network for the second data communication connection.

Example 157 is the device of either of examples 155 or 156, wherein the device further includes a means for receiving a resource response of the private wireless network indicating an allocation to the device of wireless resources of the private wireless network.

Example 158 is the device of example 157, wherein the allocation to the device of wireless resources is based on a service level contract between the private wireless network and the public wireless network.

Example 159 is the device of either of examples 157 or 158, wherein the device further includes a means for selecting the target wireless connection point from among a plurality of available wireless connection points in the private wireless networks based on a data transfer property of the wireless connection point or the target wireless connection point.

Example 160 is the device of example 159, wherein the data transfer property includes at least one of a throughput, a quality of service, a latency, a channel quality, or a bandwidth.

Example 161 is the device of any one of examples 157 to 160, wherein the device further includes a means for determining that the target wireless connection point belongs to the private wireless network based on a network identifier of the private wireless network.

Example 162 is the device of example 161, wherein the network identifier includes a mobile country code of the private wireless network.

Example 163 is the device of either of examples 161 or 162, wherein the device further includes a means for receiving the network identifier in a system information broadcast message from the private wireless network.

Example 164 is a base station including a means for transmitting a handover request to a user device with which the base station is configured for data packet communication over a first data communication connection with the user device, wherein the handover request includes a configuration report of potential wireless connection points with which the user device may establish additional data communication connections, wherein the configuration report includes a time-synchronization parameter for each of the potential wireless connection points. The base station also includes a means for receiving a handover decision indicating a selected one of the potential wireless connection points as a target wireless connection point for data packet communication over a second data communication connection between the user device and the target wireless connection point. The base station also includes a means for terminating the first data communication connection if a handover status message indicates an establishment and time-synchronization of the second data communication connection between the user device and the target wireless connection point.

Example 165 is the base station of example 164, wherein the first data communication connection includes a time-sensitive network (TSN) communication connection for controlling an endpoint device.

Example 166 is the base station of example 165, wherein the device further includes a means for generating an instruction to a companion device to control the endpoint device if the establishment and time-synchronization of the new data communication is unsuccessful.

Example 167 is the base station of either of examples 165 or 166, wherein the endpoint device includes at least one of a vehicle, a robot, or a piece of manufacturing equipment.

Example 168 is the base station of any one of examples 164 to 167, wherein the first data communication connection and the second data communication connection include simultaneous connections for data packet communication with the user device.

Example 169 is the base station of any one of examples 164 to 168, wherein the handover request includes a conditional handover request.

Example 170 is the base station of example 164 to 169, wherein the time-synchronization parameter includes a grandmaster identifier.

Example 171 is the base station of any one of examples 164 to 170, wherein the base station and the target wireless connection point each include a radio node of a wireless network.

Example 172 is the base station of example 171, wherein the wireless network includes a 5G network and the radio node includes a gNodeB.

Example 173 is the base station of any one of examples 164 to 172, wherein the base station belongs to a public wireless network and the target wireless connection point belongs to a private wireless network.

Example 174 is the base station of any one of examples 164 to 173, wherein the device further includes a means for determining that the target wireless connection point belongs to a private wireless network and generating a message requesting wireless resources of the private wireless network for the second data communication connection.

Example 175 is the base station of either of examples 173 or 174, wherein the device further includes a means for receiving a resource response of the private wireless network indicating an allocation to the user device of wireless resources of the private wireless network.

Example 176 is the base station of example 175, wherein the allocation to the user device of wireless resources is based on a service level contract between the private wireless network and the public wireless network.

Example 177 is the base station of either of examples 175 or 176, wherein the configuration report further includes a data transfer property of the potential target wireless connection points.

Example 178 is the base station of example 177, wherein the data transfer property includes at least one of a throughput, a quality of service, a latency, a channel quality, or a bandwidth.

Example 179 is the base station of any one of examples 175 to 178, wherein the device further includes a means for determining that the target wireless connection point belongs to the private wireless network based on a network identifier of the private wireless network.

Example 180 is the base station of example 179, wherein the network identifier includes a mobile country code of the private wireless network.

Example 181 is the base station of either of examples 179 or 180, wherein the device further includes a means for receiving the network identifier in a system information broadcast message from the private wireless network.

Example 182 is the base station of any one of examples 175 to 181, wherein the allocation is associated with a usage limitation/guarantee of the wireless resources, wherein the usage limitation/guarantee includes at least one of a throughput, a quality of service, a latency, a channel quality, or a bandwidth.

Example 183 is the base station of example 182, wherein the device further includes a means for performing network slicing to provide the usage limitation/guarantee.

Example 184 is the base station of any one of examples 175 to 183, wherein the allocation is associated with an accessibility limitation to informational assets within the private wireless network.

Example 185 is a base station including a means for receiving a request for allocating to a user device wireless resources of the base station, wherein the base station belongs to a private wireless network. The bae station also includes a means for determining a registration status of the user device, wherein the registration status indicates whether the user device is a registered device or a guest device with respect to the private wireless network. The base station also includes a means for determining, based on the request and the registration status, an allocation of the wireless resources of the base station, wherein the allocation is based on a service level contract between the private wireless network and the public wireless network. The device also includes a means for transmitting the allocation to the user device.

Example 185 is the base station of example 183, wherein the device further includes a means for determining the registration status based on an identifier of the user device.

Example 186 is the base station of either of examples 185 or 185, wherein the device further includes a means for transmitting to the user device a network identifier in a system information broadcast message.

Example 187 is the base station of example 186, wherein the network identifier includes a mobile country code of the private wireless network.

Example 188 is the base station of example 187, wherein the mobile country code includes 999.

Example 189 is the base station of any one of examples 185 to 188, wherein the allocation is associated with a usage limitation/guarantee of the wireless resources, wherein the usage limitation/guarantee includes at least one of a throughput, a quality of service, a latency, a channel quality, or a bandwidth.

Example 190 is the base station of example 189, wherein the device also includes a means for performing network slicing to provide the usage limitation/guarantee.

Example 191 is the base station of any one of examples 185 to 190, wherein the allocation is associated with an accessibility limitation to informational assets within the private wireless network.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A device comprising a processor configured to:
determine, in response to a handover request, a handover decision comprising whether to reconfigure the device for data packet communication with a target wireless connection point over a second data communication connection;
initiate, based on the handover decision, an establishment of the second data communication connection with the target wireless connection point and of a time-synchronization between the target wireless connection point and the device; and
execute, if the establishment is successful, a handover of data packet communication from the first data communication connection to the second data communication connection.

2. The device of claim 1, wherein the processor is further configured to release the first data communication connection only if the establishment of the second data communication connection is successful.

3. The device of either of claims 1 or 2, wherein the first data communication connection comprises a time-sensitive network (TSN) communication connection for controlling an endpoint device.

4. The device of claim 3, wherein the processor is further configured to generate a message if the establishment of the new data communication is unsuccessful, wherein the message comprises an instruction to a companion device to control the endpoint device.

5. The device of any one of claims 1 to 4, wherein the handover decision is further based on whether the first data communication connection is a time-sensitive network (TSN) communication connection.

6. The device of any one of claims 1 to 5, wherein the first data communication connection and the second data communication connection comprise simultaneous connections for data packet communication with the device.

7. The device of any one of claims 1 to 6, wherein the handover request comprises a configuration report of potential wireless connection points with which the device may establish data communication connections, wherein optionally the configuration report comprises, for each potential wireless connection point of the potential wireless connection points, a time-synchronization parameter associated with the time-synchronization, wherein optionally the time-synchronization parameter comprises a grandmaster identifier.

8. The device of claim 7, wherein the processor is further configured to select, as the target wireless connection point, at least one of the potential wireless connection points based on the configuration report.

9. The device of claim 8, wherein the configuration report indicates whether the time-synchronization parameter is a same time-synchronization parameter of the wireless connection point.

10. The device of any one of claims 1 to 9, wherein the wireless connection point and the target wireless connection point each comprise a radio node of a wireless network, wherein optionally the wireless network comprises a 5G network and the radio node comprises a gNodeB.

11. The device of any one of claims 1 to 10, wherein the processor is further configured to determine that the target wireless connection point belongs to a private wireless network and to generate a message requesting wireless resources of the private wireless network for the second data communication connection.

12. The device of claim 11, wherein the processor is further configured to receive a resource response of the private wireless network indicating an allocation to the device of wireless resources of the private wireless network, wherein the allocation to the device of wireless resources is based on a service level contract between the private wireless network and the public wireless network.

13. The device of either of claims 11 or 12, wherein the processor is further configured to select the target wireless connection point from among a plurality of available wireless connection points in the private wireless networks based on a data transfer property of the wireless connection point or the target wireless connection point.

14. A method for handing over connections between a user device and a base station, the method comprising:
transmitting a handover request to the user device with which the base station is configured for data packet communication over a first data communication connection with the user device, wherein the handover request includes a configuration report of potential wireless connection points with which the user device may establish additional data communication connections, wherein the configuration report includes a time-synchronization parameter for each of the potential wireless connection points;
receiving a handover decision indicating a selected one of the potential wireless connection points as a target wireless connection point for data packet communication over a second data communication connection between the user device and the target wireless connection point;
terminating the first data communication connection if a handover status message indicates an establishment and time-synchronization of the second data communication connection between the user device and the target wireless connection point.

15. The method of claim 14, wherein the handover request comprises a conditional handover request, and wherein the time-synchronization parameter comprises a grandmaster identifier.
